(19) Europäisches Patentamt
European Patent Office
Office européen des brevets

(11) **EP 3 133 899 B1**

(12) **EUROPEAN PATENT SPECIFICATION**

(45) Date of publication and mention
of the grant of the patent:
**16.01.2019 Bulletin 2019/03**

(51) Int Cl.:
***H05B 6/06*** *(2006.01)*     ***H05B 6/12*** *(2006.01)*

(21) Application number: **14889551.9**

(22) Date of filing: **19.11.2014**

(86) International application number:
**PCT/JP2014/080673**

(87) International publication number:
**WO 2015/159451 (22.10.2015 Gazette 2015/42)**

(54) **INDUCTION COOKER AND METHOD FOR CONTROLLING SAME**

INDUKTIONSHERD UND VERFAHREN ZUR STEUERUNG DAVON

CUISEUR À INDUCTION ET SON PROCÉDÉ DE COMMANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.04.2014   JP 2014084819**

(43) Date of publication of application:
**22.02.2017   Bulletin 2017/08**

(73) Proprietors:
• **Mitsubishi Electric Corporation**
**Chiyoda-ku**
**Tokyo 100-8310 (JP)**
• **Mitsubishi Electric Home Appliance Co., Ltd.**
**Fukaya-shi, Saitama 369-1295 (JP)**

(72) Inventors:
• **TAKESHITA, Miyuki**
**Tokyo 100-8310 (JP)**
• **KAMEOKA, Kazuhiro**
**Fukaya-shi, Saitama 369-1295 (JP)**
• **KURIKI, Yuusuke**
**Fukaya-shi, Saitama 369-1295 (JP)**
• **KAZAMA, Hirotoshi**
**Fukaya-shi, Saitama 369-1295 (JP)**

(74) Representative: **Sajda, Wolf E.**
**Meissner Bolte Patentanwälte**
**Rechtsanwälte Partnerschaft mbB**
**Postfach 86 06 24**
**81633 München (DE)**

(56) References cited:
**EP-A1- 2 237 641        EP-A1- 2 405 715
CN-U- 203 457 343        JP-A- 2000 340 352
JP-A- 2007 199 356        JP-B2- 2 647 079
JP-B2- 4 509 061         JP-B2- 4 969 676
US-B1- 6 498 325**

## Description

Technical Field

The present invention relates to an induction-heating cooker which inductively heats a single heated body by means of a plurality of induction-heating coils of the induction-heating cooker, and a method of controlling thereof.

Background Art

Many of induction-heating cookers have been suggested so far which inductively heats a single heated body by means of a plurality of induction-heating coils thereof. For example, Patent Document 1 (JP 2010-080 359 A) discloses an induction-heating cooker comprising a half-bridge drive circuitry having a high resonance frequency, a full-bridge drive circuitry having a comparatively low resonance frequency, a relay for switching to the half-bridge drive circuitry or the full-bridge drive circuitry, which inductively heats a pan made of low magnetic permeability material such as aluminum by means of the half-bridge drive circuitry and another pan made of high magnetic permeability material such as steel by means of the full-bridge drive circuitry (about 20 kHz).

Also, Patent Document 2 (JP 5 169 488 B) suggests another induction-heating cooker which uses a plurality of heating coils simultaneously or alternately to inductively heat a pan. The induction-heating cooker includes two pairs of serially-connected semiconductor switches, a pair of resonance circuitries each having substantially the same resonance frequency and being connected to a middle nodes of the serially-connected semiconductor switches, and a relay between a connected node of the resonance circuitries and a negative terminal of a power source.

The induction-heating cooker of Patent Document 2 is adapted to switch ON-OFF state of the relay for selectively defining a pair of half-bridge drive circuitries or a single full-bridge drive circuitry so as to switch the direction of current through a plurality of heating coils, thereby achieving different heating distribution in accordance with a shape and/or a heated circumstance of a load such as the pan or a heating condition of the induction-heating cooker.

Document EP 2 405 715 A1 also discloses an induction-heating cooker according to the prior art.

Summary of the Invention

Problems to be solved by the Invention

However, the induction-heating cookers of Patent Document 1 and 2 have drawbacks to require a switching circuitry for selective connection of the heating coils which makes the circuit architecture and the control method rather complicated and raises the manufacturing cost substantially. Also when the single pan is made of composite material containing a magnetic material such as steel-based high magnetic permeability material and a non-magnetic material such as aluminum-based or copper-based low magnetic permeability material, the pan is determined as including portions of different materials over each of the heating coils regardless the single pan being heated body over the heating coils, which may in turns stop inductively heating the pan.

Furthermore, even if the induction- heating may be determined as operable, the different materials cause the resonance frequencies of the heating coils to be offset, which eventually leads less efficient heating of the pan. In addition to less efficient heating of the pan, even further deviated resonance frequencies cuts back the induction-heating due to a heat generated by the drive circuitries.

Also, when the relay is closed to operate each of the drive circuitries for each of the heating coils, each portion of the pan over the heating coils is determined as being composed of different material, thus the resonance frequencies of the heating coils are different from each other. This causes one of the heating coils (drive circuitries) heat the magnetic portion of the pan and the other one of the heating coils heat the non-magnetic portion of the pan, which is in a similar situation where a plurality of pans are heated by the multiple heating coils. Thus, different resonance frequencies of the portions of the pan cause different driving frequencies of the heating coils, and the differential frequency between the driving frequencies falling within the audible frequency causes interfering noise (pan ringing) having the differential frequency. In order to avoid such interfering noise that is uncomfortable for a user, the driving frequencies should be the same among the heating coils.

However the high-frequency current of the driving frequency set to be high in accordance with the high resonance frequency of the non-magnetic material may not be able to inductively heat the pan portion having the low resonance frequency of the magnetic material in an efficient manner to supply with sufficient power. Thus when the induction-heating cookers of Patent Document 1 and 2 are used to inductively heat the pan made of composite material, the pan is unevenly heated due to the portions of different composing material of the pan even if the duty ratio of ON/OFF time period is appropriately adjusted for each of the heating coils.

To address the drawbacks, the present invention provides an induction-heating cooker which can heat a pan made of composite material having different resonance frequencies in an efficient manner, when the multiple heating coils cooperatively heat the single pan, without requiring additional or redundant circuitry such as the switching circuitry

Means for Solving the Problems

One aspect of the invention is to provide an induction-heating cooker, which comprises a top plate for supporting a heated body thereon, a central coil wound on a plane, a peripheral coil arranged around the central coil, a drive circuitry supplying high-frequency current to the central coil and the peripheral coil, a power source applying direct voltage across the drive circuitry, means for detecting load resistance of portions of the heated body positioned over the central coil and the peripheral coil through the top plate, and a controller for controlling the drive circuitry, in accordance with the load resistance of the portions of the heated body, in either one of drive modes selected from a parallel drive mode in which the drive circuitry is controlled with both of the central coil and the peripheral coil being connected in parallel across the power source, a serial drive mode in which the drive circuitry is controlled with the central coil and the peripheral coil being connected in series across the power source, and an individual drive mode in which the drive circuitry is controlled with either one of the central coil and the peripheral coil being connected across the power source.

Advantages of the Invention

One aspect of the present invention provides an induction-heating cooker, in which only the central coil is supplied with the high-frequency current when heating a small pan so as to suppress undesirable circuit loss otherwise generated by the drive circuitry of the peripheral coil and to avoid unnecessary magnetic flux generated by the peripheral coil, also both of the central and peripheral coils are supplied with the high-frequency current when heating a larger pan in an efficient manner.

Another aspect of the present invention provides an induction-heating cooker, which switches the circuit architecture of the driver so as to heat the single pan formed of a plurality of materials having the resonance frequency different from each other in cooperation with a plurality of the heating coils, thereby to avoid the inferring noise which is uncomfortable for the user. Also no relay is required for switching the circuit architecture of the driver, as disclosed in the aforementioned Patent Documents 1, 2 so as to downsize the circuit architecture and produce the driver at a reasonable cost.

Brief Description of Drawings

FIG. 1            is a perspective view of an induction-heating cooker according to the present invention.

FIGs. 2A and 2B     are top plan views of heating coils illustrating exemplary structures thereof.

FIG. 3            is a circuit block diagram of the heating coil, a driver, and a controller.

FIG. 4A         is a top plan view of the heating coil, and FIG. 4B is a cross sectional view of an IH heating unit taken along A-A' line of FIG. 4A.

FIG. 5            is a circuit diagram of a power source circuitry, a driver, and a controller according to the present invention.

FIG. 6            is a timing chart of control signals driving the semiconductor switching elements for ON/OFF operation in a parallel drive mode.

FIG. 7            is a circuit diagram of the driver in a parallel drive mode according to the present invention.

FIG. 8            is a top plan view of the heating coil, showing directions of the high-frequency current running through each of the sub-coils in a parallel drive mode.

FIG. 9            is a timing chart of the control signals driving the semiconductor switching elements for ON/OFF operation in a serial drive mode.

FIG. 10          is a circuit diagram of the driver in a serial drive mode according to the present invention.

FIG. 11        is a top plan view of the heating coil, showing directions of the high-frequency current running through each of the sub-coils in the serial drive mode.

FIG. 12        is a timing chart of control signals driving the semiconductor switching elements for ON/OFF operation in an individual drive mode.

FIG. 13        is a top plan view of the heating coil, showing a position of a pan over the heating coils in the individual drive mode.

FIG. 14        is a circuit diagram of the driver in the individual drive mode according to the present invention.

FIG. 15        is a top plan view of the heating coil, showing directions of the high-frequency current running through a central coil in the serial drive mode.

FIGs. 16 A     and 16C show wound directions of the heating coils according to the second embodiment, and FIG. 16B shows directions of the high-frequency current running through each of the sub-coils in the serial drive mode.

FIG. 17        is a top plan view of the heating coil according to the second embodiment showing directions of the high-frequency current running through each of the sub-coils in the serial drive mode.

FIG. 18        is a circuit diagram of the driver in the serial drive mode according to the second embodiment.

FIG. 19        Is a flowchart showing a method for controlling the induction-heating cooker according to the present invention.

FIG. 20A       is a bottom view of a special pan made of composite material, and FIG. 20B is a cross sectional view of an IH heating unit taken along B-B' line of FIG. 20A.

Description of Embodiments

Referring to attached drawings, several embodiments of an induction-heating cooker according to the present invention will be described hereinafter. In the description, a couple of terms for indicating the directions (for example, "upper" and "lower" etc.) are conveniently used just for facilitating clear understandings, it should not be interpreted that those terms limit the scope of the present invention. Similar components are denoted with similar reference numerals throughout the description.

Embodiment 1.

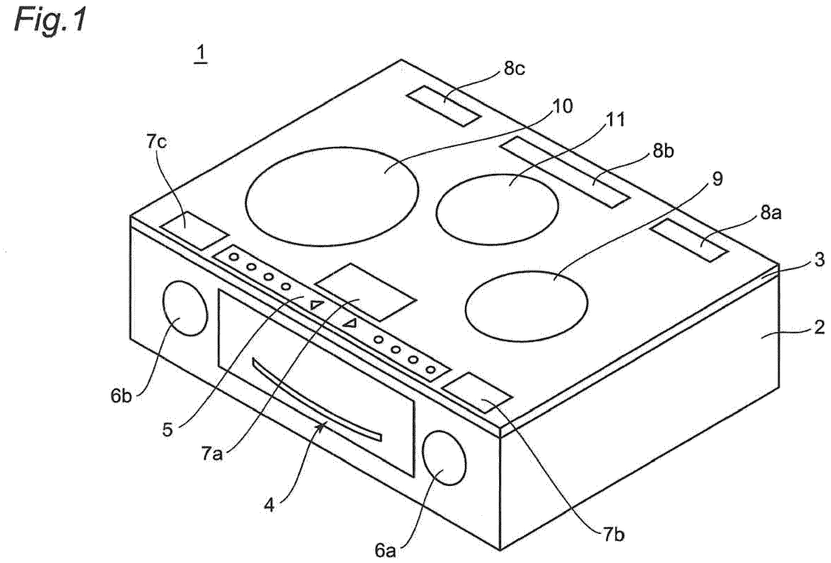

With reference to FIGs. 1 to 15, a first embodiment of an induction-heating cooker according to the present invention will be described hereinafter. FIG. 1 is a perspective view schematically illustrating an overall of the induction-heating cooker 1. As illustrated in FIG. 1, the induction-heating cooker 1 includes, in general, a housing 2 made from a metal plate, a top plate 3 of glass substantially covering the upper surface of the housing, a pair of heating units 9, 10 arranged beneath the top plate 3 and closer to the right and left sides of the housing, another heating unit 11 positioned beyond the heating units 9, 10, and a cooking oven 4.

The heating units 9, 10 may be structured as IH (induction heating) heating units, each of which has an induction heating coil 100 beneath the top plate 3. Another heating unit 11 may be provided as a radiant heating unit having a radiant heater, but not limited thereto, or as another IH heating unit having an induction heating coil. As an example, the heating unit 10 shown in the left side of FIG. 1 will be described and illustrated as the IH heating unit of the present invention, the heating unit 9 as well as the heating unit 11 may be adapted as IH heating units of the present invention. It should be noted that the number and arrangement of the IH heating units are not limited thereto, and the induction-heating cooker 1 may include one, two, three or more IH heating units which may be arranged in a line towards a left-right direction or an inverted triangle configuration.

Also a so-called centre-oven type of the induction-heating cooker 1 having the cooking oven 4 arranged in the middle thereof will be described as one example, but not limited thereto, and the present invention may be adapted equally to a side-oven type induction-heating cooker having the cooking oven 4 arranged closer to either side and to a induction-heating having no cooking oven.

Also the induction-heating cooker 1 may include an upper console 5 allowing a user to operate each of the heating units 9, 10, 11 and the cooking oven 4, a front console 6a, 6b which may be formed by adjusting dials, and displays 7a,7b, 7c such as a LCD indicating the control conditions and operating guidance. The induction-heating cooker 1 may include an indicator such as a LED array on the upper console 5 indicating the heating power set thereby. The upper console 5 and the displays 7a, 7b, 7c are not limited to those as illustrated, and may be integrated.

Furthermore the induction-heating cooker 1 may include outtake and intake windows 8a, 8b, 8c arranged on the top plate 3 and closer to the back side of the housing 2. As it will be described later in detail, the induction-heating cooker 1 comprises a power source 30 and a driver 40 for supplying high-frequency current to the IH heating units 9, 10. As above, the present invention is not limited to the arrangement and the number of components shown in the drawings. Similar reference numerals are used for indicating components having similar functions.

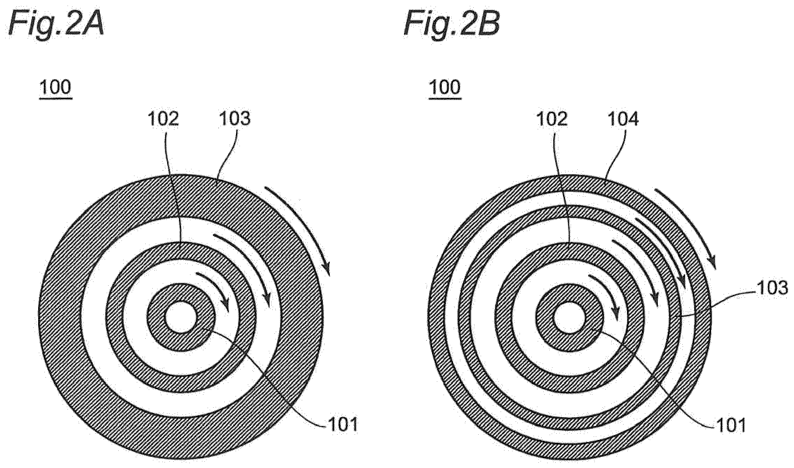

FIGs. 2A and 2B are top plan views illustrating exemplary structure of the heating coils 100 of the IH heating units 9, 10, which are positioned beneath the top plate 3. The heating coil 100 includes a plurality of sub-coils formed by winding a linear conductor such as a litz-wire, each of which is arranged in a concentric fashion. The heating coil 100 of FIG. 2A has three of concentrically arranged sub-coils 101, 102, 103. Each of sub-coils may be connected electrically in parallel, but alternatively the innermost sub-coils 101, 102 may be connected in series to form a "central coil" and the outermost sub-coil 103 alone may form a "peripheral coil". Thus, in the present disclosure, the "central coil" and "peripheral coil" are composed of a set of one, two or more sub-coils, and the heating coil 100 includes at least two of the sub-coil sets (the central coil and the peripheral coil).

The sub-coils 101, 102, 103 may be formed so that the high-frequency current runs in the same direction within the same cycle as shown by the arrow of FIG. 2A, although depending upon the circuit architecture of the driver 40. The heating coil 100 of FIG. 2A has three sub-coils 101, 102, 103, while the heating coil 100 of FIG. 2B has four sub-coils 101, 102, 103, 104, and includes the central coil and the peripheral coil (sub-coil sets) composed of any number of the sub-coils. For example, the heating coil 100 of FIG. 2B has the central coil of the sub-coils 101, 102 and the peripheral coil of the sub-coils 103, 104, other combination of the sub-coils are perceived. Besides FIG. 2B, each of the sub-coils may be individual or may be connected to the other sub-coil in series or parallel, while the heating coil 100 of the present invention comprises the central coil and the peripheral coil.

The heating coil 100 of the present invention includes the central coil and the peripheral coil each having the sub-coil sets. Although FIGs. 2A and 2B illustrate each of the sub-coils 101 to 104 having a ring configuration arranged in a concentric fashion, it should be noted that the configuration and arrangement of the sub-coils are not limited thereto. For example, the peripheral coil may circumferentially be arranged around the central coil rather concentrically therewith, having a plurality of the sub-coils of a dimeter smaller than the central coil (not shown).

The sub-coil 102 of FIGs. 2A and 2B composing the central coil preferably has an outer diameter of about 14 cm appropriate for heating a small-sized pan, and the sub-coil 103 of FIGs. 2A composing the peripheral coil has an outer diameter of about 24 cm appropriate for heating a large-sized pan. Also, the sub-coil 103 of FIGs. 2B composing the peripheral coil has an outer diameter of about 20 cm appropriate for heating a middle-sized pan, and the sub-coil 104 of FIGs. 2B has an outer diameter similar to that of the sub-coil 103 of FIGs. 2A, which is appropriate for heating a large-sized pan.

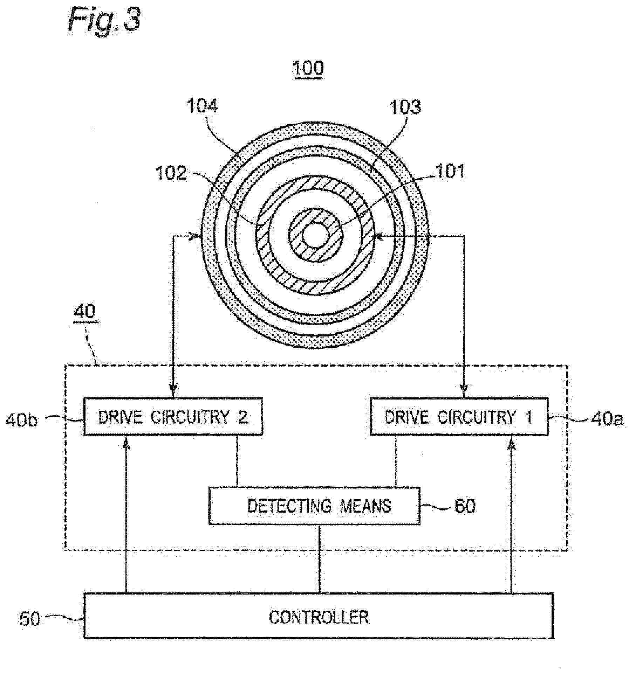

FIG. 3 is a circuit block diagram including the heating coil 100, the driver 40, and the controller 50. In FIG. 3, the heating coil 100 includes the central coil of the sub-coils 101, 102 and the peripheral coil of the sub-coils 103, 104. It should be noted that the numbers of the sub-coils composing the central coil and the peripheral coil are not limited to those shown in FIG. 3. The heating coil 100 will be described hereinafter, which includes the central coil of two sub-coils 101, 102 and the peripheral coil of two sub-coils 103, 104.

The heating coil 100 is driven by the driver 40. Thus, the driver 40 includes a first drive circuitry 40a for supplying the high-frequency current to the central coil composed of the sub-coils 101, 102 connected in series, a second drive circuitry 40b for supplying the high-frequency current to the peripheral coil composed of the sub-coils 103, 104 connected in series, and detecting means 60 for detecting the load characteristics of the pan P which stands over the heating coil 100 via the top plate 3. The detecting means 60 is adapted to detect the load characteristics with the central coil and the peripheral coil. The controller 50 is adapted to controls the first drive circuitry 40a driving the central coil and the second drive circuitry 40b driving the peripheral coil in accordance with the detected results of the detecting means 60.

As will be described in detail hereinafter, the load characteristics of the pan P includes, for example, resonance frequency, inductance, load resistance of the pan P which stands over the central coil and the peripheral coil, and can be determined in accordance with electric characteristics such as current through the power source 30, current through and voltage across the central coil and the peripheral coil, and voltage across a resonance capacitor 80, as disclosed in the commonly assigned Japanese patent application publication JP 2012-054179 A.

Thus in this disclosure, the load characteristics of the heated body (i.e., pan P) can be determined by the detecting means 60 detecting measurable current and voltage of the power source 30, the central coil and the peripheral coil. However the detecting method for detecting the load characteristics of the pan P is not limited to those disclosed in the aforementioned Japanese patent application publication, and any other types of electric characteristics of the peripheral circuitries such as the central coil and the peripheral coil may be used to determine the load characteristics of the pan P.

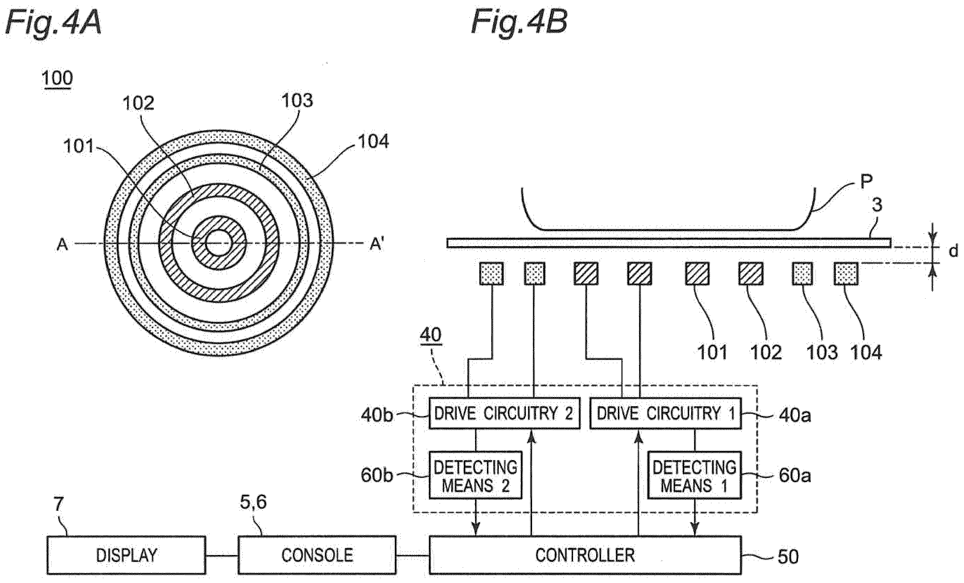

FIG. 4A is a top plan view of the heating coil 100, similar to FIG. 3B, and FIG. 4B is a cross sectional view of the IH heating unit 10 taken along A-A' line of FIG. 4A, illustrating the circuit configuration comprising the driver 40, the controller 50, and the heating coil 100 (sub-coils 101 to 104). Similar reference numerals are used in FIGs. 3 and 4 for indicating components having similar functions.

In FIG. 4B, the central coil includes the sub-coils 101, 102 connected in series, which is connected to the first drive circuitry 40a. A first detecting means 60a detects the load characteristics of the pan P which stands over the central coil via the top plate 3 with a gap d spaced thereto. Also the peripheral coil includes the sub-coils 103, 104 connected in series, which is connected to the second drive circuitry 40b. A second detecting means 60b detects the load characteristics of the pan P which stands over the peripheral coil via the top plate 3 with a gap d spaced thereto. The first and second detecting means 60a, 60b are adapted to detect the electric characteristics such as current through and voltage across the power source 30 and the driver 40 (e.g., the central coil and the peripheral coil, and determine the load characteristics of the pan P in accordance with the electric characteristics.

The controller 50 is adapted to determine the load characteristics of the pan P such as existence/absence, standing position, resonance frequency, inductance, load resistance, constituent material of the pan P in accordance with the electric characteristics detected by the first and second detecting means 60a, 60b. The controller 50 is adapted to select the driving frequency appropriate for the constituent material of the pan P, and control the first and second drive circuitries 40a, 40b so as to supply high-frequency current to the heating coil 100 in amounts corresponding to the heating power set by the user via the consoles 5, 6a, 6b. If the controller 50 determines no pan P standing on the top plate 3 in accordance with the consequences (load characteristics) detected by the first and second detecting means 60a, 60b, it ceases operation of the driver 40 and reports the user about no pan P via the display 7. Any other reporting means may be applied, including for example, flickering lights (not shown) and buzzing sounds.

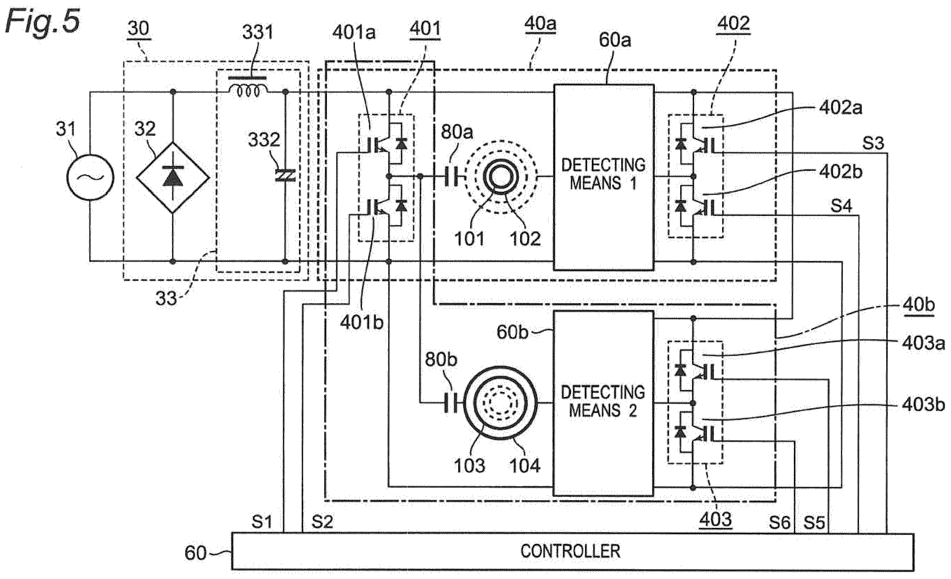

FIG. 5 is a circuit diagram illustrating further detailed structure of the driver 40 of FIG. 4. Similar reference numerals are used for indicating components having similar functions.

FIG. 5 is a circuit diagram of the driver 40 supplying to the heating coil 100, the high-frequency current for generating high-frequency magnetic field, which in turn inductively heats the heated body such as a pan P. The power source 30 shown by dotted line of FIG. 5 includes a diode-bridge 32 that rectifies the voltage from the alternate power source 31, and a smoothing circuitry 33 having a coil 331 and a smoothing capacitor 332 that smooths the rectified voltage into a direct voltage, which applies the direct power source with the driver 40. The driver 40 supplies the high-frequency current to the heating coil 100 in accordance with the commands (control signals S1-S6) from the controller 50. When the user selects the heating power via the upper console 5 or the front console 6 (shown in FIG. 1) for heating the pan P, the controller 50 controls the driver 40 to supply the high-frequency current to the heating coil 100 by managing the driving frequency or the amount of the high-frequency current (i.e., control signals S1 to 6) so as to heat the pan P at the heating power selected by the user.

The driver 40 includes the first drive circuitry 40a for supplying high-frequency current to the central coil composed of the sub-coils 101, 102 connected in series, and the second drive circuitry 40b for supplying high-frequency current to the peripheral coil composed of the sub-coils 103, 104 connected in series.

The first drive circuitry 40a includes a first switching element pair 401 (referred to as a "first arm" herein) having two of semiconductor switching elements 401a, 401b connected in series, and a second switching element pair 402 (referred to as a "second arm" herein) having two of semiconductor switching elements 402a, 402b connected in series. The first drive circuitry 40a also includes the central coil (i.e., sub-coils 101, 102) and a resonance capacitor 80a connected in series and between middle nodes of the first and second arms 401, 402 so as to form a full-bridge inverter.

Similarly, the second drive circuitry 40b includes the first arm 401 and a third switching element pair 403 (referred to as a "third arm" herein) having two of semiconductor switching elements 403a, 403b connected in series. The second drive circuitry 40b also includes the peripheral coil (i.e., sub-coils 103, 104) and a resonance capacitor 80b connected in series and between middle nodes of the first and third arms 401, 403 so as to form another full-bridge inverter.

The first and second drive circuitries 40a, 40b of FIG. 5 include first and second detecting means 60a, 60b, which detect the load characteristics of the pan P standing over the central and peripheral coils in accordance with current through and voltage across the central and peripheral coils, respectively. The controller 50 is adapted to determine the standing conditions such as existence/absence, offset position, and constituent material of the pan P in accordance with the detected load characteristics.

The electric characteristics detected by the first and second detecting means 60a, 60b which are required for detecting or determining the load characteristics may include current through and voltage across the central and peripheral coils and the resonance capacitors 80a, 80b, and as well as current through the power source 30 although detailed description is abbreviated. Also the first and second detecting means 60a, 60b may include a thermal sensor or an optical sensor for detecting the standing conditions of the pan P on the top plate.

In the meanwhile, when the central coil (i.e., sub-coils 101, 102) has its inductance La and the resonance capacitor 80a that is connected thereto has its capacitance Ca, the resonance frequency f0a of the serial resonance load circuit having the central coil and the resonance capacitor 80a can generally be obtained by the following formula.

Formula 1

$$f0a = \frac{1}{2 \cdot \pi \cdot \sqrt{La \times Ca}}$$

Also, when the peripheral coil (i.e., sub-coils 103, 104) has its inductance Lb and the resonance capacitor 80b that is connected thereto has its capacitance Cb, the resonance frequency f0b of the serial resonance load circuit having the peripheral coil and the resonance capacitor 80b can generally be obtained by the following formula.

Formula 2

$$f0b = \frac{1}{2 \cdot \pi \cdot \sqrt{Lb \times Cb}}$$

It is preferable to design the driving frequency fswa of the full-bridge inverter circuit (the first drive circuitry 40a) including the first and second arms 401, 402, the central coil (sub-coils 101, 102), and the resonance capacitor 80a, as being higher than the resonance frequency f0a of the central coil (fswa > f0a). Also it is preferable to design the driving frequency fswb of the full-bridge inverter circuit (the second drive circuitry 40b) including the first and third arms 401, 403, the peripheral coil (sub-coils 103, 104), and the resonance capacitor 80b, as being higher than the resonance frequency f0b of the peripheral coil (fswb > f0b).

This is to avoid damages to the semiconductor switching elements of the arms 401, 402, 403 because of increased circuit losses thereof when the first and second drive circuitries 40a, 40b are driven at the driving frequency less than the resonance frequency f0a, f0b. Especially when the driving frequency is equivalent to the resonance frequency f0a, f0b, the overcurrent runs through the semiconductor switching elements so that the damages are increased proportional to the square of running current, thereby causing a risk of the fatal damage due to the overcurrent.

It should be noted that each of the semiconductor switching elements of the first, second, and third arms 401, 402, 403 may be provided with a snubber capacitance (not shown) connected in parallel thereto so as to reduce noise at switching, as required.

It is preferable to select the inductance of the sub-coils 101 to 104 and the capacitance of the resonance capacitors 80a, 80b so that in a condition where no pan P stands on the top plate 3 (i.e., so-called a non-load condition), the resonance frequency f0a, f0b are more or less 20 kHz and relative close each other, for example the differential frequency $\Delta$f0 between the resonance frequency f0a, f0b is less than 3 kHz.

In order to eliminate the ringing pan (howling noise), it is necessary to drive the central and peripheral coils at the same driving frequency fsw. On the other hand, if the difference between the resonance frequency f0a of the central coil and the driving frequency fsw is greater than the difference between the resonance frequency f0b of the peripheral coil and the driving frequency fsw, then the high-frequency current through the peripheral coil tends to be greater than that through the central coil, and vice versa, if the difference between the resonance frequency f0b of the peripheral coil and the driving frequency fsw is greater than the difference between the resonance frequency f0a of the central coil and the driving frequency fsw, then the high-frequency current through the central coil tends to be greater than that through the peripheral coil.

Thus, the difference between the resonance frequency f0a, f0b causes the difference of the high-frequency currents through between the central coil and the peripheral coil, which in turn causes deviation or unevenness of heat generated in the portions of the pan P standing over the central and peripheral coils. Therefore, in order to evenly heat the pan P, it is desirable to select the inductance La, Lb of the central and peripheral coils and the capacitance Ca, Cb of the resonance capacitors 80a, 80b so that the difference between the resonance frequencies f0a, f0b is minimised.

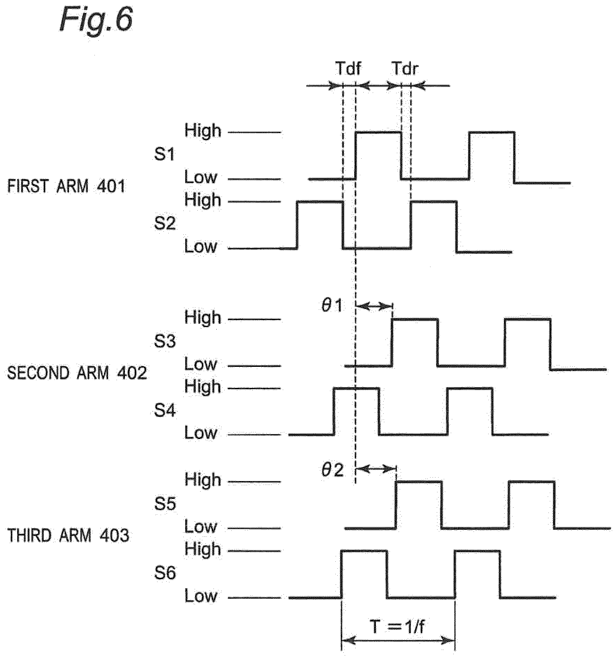

FIG. 6 is a timing chart of the control signals S1-S6 output from the controller for driving ON/OFF operations of the semiconductor switching elements of the first, second, and third arms 401-403. As illustrated in FIG. 5, the semiconductor switching elements 401a, 401b of the first arm 401 are applied with the control signals S1, S2, respectively, which is a pair of complementary signals having coincident phases and exclusively alternate ON/OFF durations to each other.

With reference to FIG. 6, the operation of the semiconductor switching elements 401a, 401b of the first arm 401 will be described hereinafter. In FIG. 6, the control signal S1 at High-level causes the semiconductor switching element 401a at ON-condition, and the control signal S1 at Low-level causes the semiconductor switching element 401a at OFF-condition. In order to avoid a time duration when the semiconductor switching elements 401a, 401b are simultaneously at ON-condition leading the first arm 401 in a short-circuit condition, dormant periods (dead-times Tdr, Tdf) are provided for concurrent OFF-conditions of the semiconductor switching elements 401a, 401b. This prevents concurrent ON-conditions and excess current running through the semiconductor switching elements 401a, 401b, thereby avoiding fatal damages thereto.

Thus, the ON-time duration is equal to half of the period T minus the dead-times Tdr, Tdf. For example, if the dead-times Tdr, Tdf are set zero, the control signals S1, S2 have the ON-time duration equivalent to half of the period T (i.e., the duty ratio is 50%). Similarly, the semiconductor switching elements 402a, 402b of the second arm 402 are applied with the control signals S3, S4, and the semiconductor switching elements 403a, 403b of the third arm 403 are applied with the control signals S5, S6. The control signals S3, S4 and S5, S6 are pairs of complementary signals provided with the dead-times Tdr, Tdf, as well as the control signals S1, S2.

The amount of the high-frequency current supplied to the central coil of the sub-coils 101, 102 are determined by the phase difference $\theta 1$ (> 0) between the control signals S1, S3 (or between the control signals S2, S4). The greater phase difference $\theta 1$ causes more amount of the high-frequency current through the central coil. Also the amount of the high-frequency current supplied to the peripheral coil of the sub-coils 103, 104 are determined by the phase difference $\theta 2$ ( > 0) between the control signals S1, S5 (or between the control signals S2, S6). The controller 50 is adapted to control the phase difference $\theta 1$ and/or $\theta 2$ so as to achieve the heating power selected by the user via the upper console 5 or the front console 6.

Also the controller is adapted to control the frequency f ( = 1 /T) of the control signals S1-S6 to be the same in order to avoid the interfering noise (pan ringing) resulted from the difference of the frequencies of the high-frequency current supplied to the central and peripheral coils.

The frequency f ( = 1/T) of the control signals S1-S6 is equivalent to the driving frequency fsw for driving each of the semiconductor switching elements and to the frequency of the high-frequency current supplied to the central and peripheral coils. As above, the driving frequency fsw is determined by the controller 50 in accordance with the load characteristics detected by the detecting means 60.

The detecting means 60 detects the electric characteristics of the driver 40 when the pan P stands on the top plate 3 and the load characteristics of the pan P, and the controller 50 determines the frequency optimal for heating the pan P or the driving frequency fsw in accordance with the detected consequence of the detecting means 60 (resonance frequency f0). The driving frequency fsw may be set as a predetermined value based upon the detected consequence (the load characteristics or the electric characteristics of the driver 40 when the pan P stands over the heating coil 100 via the top plate 3), or may be calculated in accordance with the load characteristics detected by the detecting means 60.

As described above, the controller 50 determines the driving frequency fsw in accordance with the load characteristics obtained based upon the electric characteristics detected by the detecting means 60. When the pan P stands on the top plate 3, each of the sub-coils 101 to 104 magnetically couples with the metal material composing the pan P so as to vary the inductance thereof. Variation of the inductance due to magnetic coupling between the pan P and each of the sub-coils causes variation of the resonance frequency f0a of the serial resonance load circuit having the sub-coils 101, 102 and the resonance capacitor 80a, and variation of the resonance frequency f0b of the serial resonance load circuit having the sub-coils 103, 104 and the resonance capacitor 80b. Thus, since the resonance frequency f0a, f0b of the first and second drive circuitries 40a, 40b vary due to the constituent material of the pan P, the controller 50 can identify the constituent material of the pan P standing on the top plate 3 in accordance with the variation of the load characteristics (i.e. the resonance frequency) obtained based upon the electric characteristics.

As discussed above, it is desirable that the driving frequency fswa for driving the full-bridge inverter (the first drive circuitry 40a) which comprises the first and second arms 401, 402, the central coil (sub-coils 101, 102), and the resonance capacitance 80a is greater than the resonance frequency f0a which is determined in accordance with the inductance La of the central coil and the capacitance Ca of the resonance capacitor 80a. Similarly, it is desirable that the driving frequency fswb for driving the full-bridge inverter (second drive circuitry 40b) which comprises the first and third arms 401, 403, the peripheral coil (sub-coils 103, 104), and the resonance capacitance 80b is greater than the resonance frequency f0b which is determined in accordance with the inductance Lb of the peripheral coil and the capacitance Cb of the resonance capacitor 80b.

Also, the difference $\Delta fa$ (= fswa - f0a), $\Delta fb$ (= fswa - f0a) between the resonance frequency f0a, f0b and the driving frequency fswa, fswb are desirably more than 1 kHz, and also may be determined in accordance with the electric characteristics of the first and second drive circuitries 40a, 40b which vary in response to the standing condition of the pan P, in order to reduce the circuit loss of the drive circuitries. The latter is to reduce the circuit loss of the switching elements of the first and second drive circuitries 40a, 40b and to prevent the damage thereof due to the excess current. Also it is desirable to control the frequency f ( = 1/T) of the control signals S1-S6 to be the same in order to avoid the interfering noise (pan ringing) resulted from the differential frequency of the high-frequency current supplied to the central and peripheral coils.

Thus the controller 50 is adapted to calculate the resonance frequency f0a, f0b of the first and second drive circuitries 40a, 40b based upon the detected results of the detecting means 60a, 60b, and if the difference between the resonance frequency f0a, f0b is less than a given threshold, to set the driving frequency fsw greater than the resonance frequency f0a, f0b as the frequency f of the control signals S1-S6.

Alternatively, the controller 50 may store some predetermined driving frequencies in a memory (not shown) which are appropriate for the given electric characteristics of the first and second drive circuitries 40a, 40b, and select the appropriate frequency fsw among the stored driving frequencies as the driving frequency.

The first and second drive circuitries 40a, 40b are driven by the control signals S1 to S6 at the driving frequency fsw so determined as illustrated in FIG. 6.

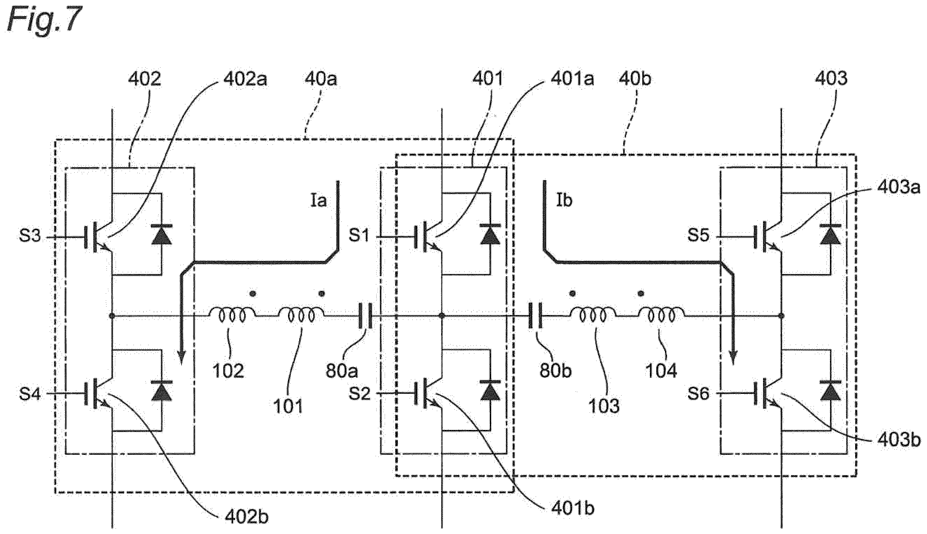

FIG. 7 is a circuit diagram of the driver 40 according to the present invention. Similar reference numerals are used for indicating components having similar functions. As shown in FIG. 7, the resonance capacitor 80a has one end connected to the middle node between the higher-voltage semiconductor switching element 401a and the lower-voltage semiconductor switching element 401b of the first arm 401, and the other end connected to the inner end (one end closer to the center of the wound coil shown by a solid circle in FIG. 7) of the sub-coil 101 of the central coil. The outer end of the sub-coil 101 is connected to the inner end (one end closer to the center of the wound coil shown by a solid circle in FIG. 7) of the sub-coil 102, and the outer end of the sub-coil 102 is connected to the middle node between the higher-voltage semiconductor switching element 402a and the lower-voltage semiconductor switching element 402b of the first arm 402. Thus, the central coil (sub-coils 101, 102) and the first resonance capacitor 80a are connected in series between the middle nodes of the first and second arms 401, 402.

Similarly, as shown in FIG. 7, the resonance capacitor 80b has one end connected to the middle node between the higher-voltage semiconductor switching element 401a and the lower-voltage semiconductor switching element 401b of the first arm 401, and the other end connected to the inner end (one end closer to the center of the wound coil shown by a solid circle in FIG. 7) of the sub-coil 103 of the peripheral coil. The outer end of the sub-coil 103 is connected to the inner end (one end closer to the center of the wound coil shown by a solid circle in FIG. 7) of the sub-coil 104, and the outer end of the sub-coil 104 is connected to the middle node between the higher-voltage semiconductor switching element 403a and the lower-voltage semiconductor switching element 403b of the third arm 403. Thus, the peripheral coil (sub-coils 103, 104) and the second resonance capacitor 80b are connected in series between the middle nodes of the first and third arms 401, 403. In FIG. 7, the inner ends (one end closer to the center of the wound coil) of the sub-coils 101 to 104 are indicated by solid circles.

FIG. 7 also indicates the high-frequency current Ia through the resonance capacitor 80a and the sub-coils 101, 102 (central coil) connected in series, and as well as the high-frequency current Ib through the resonance capacitor 80b and the sub-coils 103, 104 (peripheral coil) connected in series. As shown, the high-frequency current Ia runs through the first full-bridge circuit (first drive circuitry 40a) composed of the first and second arms 401, 402, while the high-frequency current Ib runs through the second full-bridge circuit (second drive circuitry 40b) composed of the first and third arms 401, 403. A method (mode) for controlling the driver 40 with use of the first arm 401 as a common arm of the first and second drive circuitries 40a, 40b for supplying the high-frequency currents Ia, Ib is referred to as a "parallel drive mode" in the present disclosure. In other words, the parallel drive mode is the drive mode for controlling the driver 40 so that the central coil and the peripheral coil are connected in parallel across the power source 30.

The high-frequency current Ia, Ib are illustrated in FIG. 7 as running from the higher-voltage semiconductor switching element 401a of the first arm 401 through the lower-voltage semiconductor switching elements 402b, 403b of the second and third arms, respectively. However, it is needless to mention, in the reverse phase, the high-frequency current Ia, Ib run from the higher-voltage semiconductor switching elements 402a, 403a of the second and third arms through the lower-voltage semiconductor switching element 401b of the first arm 401.

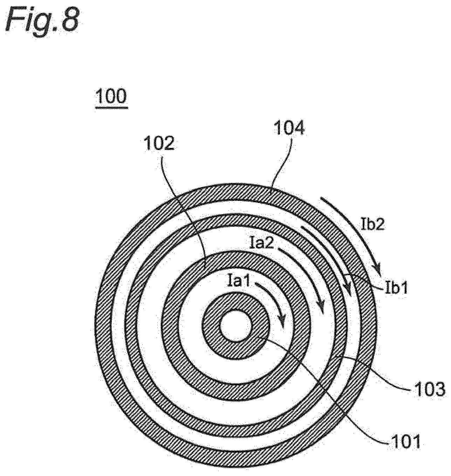

FIG. 8 is a top plan view similar to FIG. 2B showing the heating coil 100 with directions of the high-frequency current running through each of the sub-coils 101 to 104 thereof. FIG. 8 indicates the directions of the high-frequency current running through each of the sub-coils 101 to 104 of the heating coil 100 by arrows Ia1, Ia2, Ib1, Ib2, respectively. As the sub-coils 101, 102 and the sub-coils 103, 104 are connected in series, the amounts of the high-frequency current therethrough are equal to Ia, Ib, respectively (Ia1 = Ia2 = Ia, Ib1 = Ib2 = Ib).

Each of the sub-coils 101 to 104 is wound from the inner end and for example in a clockwise manner in FIG. 8. However, each of the sub-coils 101 to 104 may also be wound in the same counter-clockwise manner.

The controller 50 provides the driver 40 with the control signals S1 to S6, in which the directions of the high-frequency current running through each of the sub-coils 101 to 104 are switched alternately during one cycle T (= 1/f, f: the driving frequency fsw), but are the same directions within the same phase of the cycle T. When focusing on the inner ends of the sub-coils 101 to 104 shown in FIG. 7, the high-frequency current Ia runs from the first arm 401 through the resonance capacitor 80a and the inner ends of the sub-coils 101, 102 to the second arm 402 at a particular phase within one cycle T, which is indicated by the arrows of Ia1 to Ia2 of FIG. 8. At the same particular phase, the high-frequency current Ib runs from the first arm 401 through the resonance capacitor 80b and the inner ends of the sub-coils 103, 104 to the third arm 403, which is indicated by the arrows of Ib1 to Ib2 of FIG. 8.

As discussed above with reference to FIGs. 7 and 8, the high-frequency current run through each of the sub-coils 101 to 104 of the heating coil 100 in the same direction. It should be noted that the connection orders among the resonance capacitor 80a and the sub-coils 101, 102 and among the resonance capacitor 80b and the sub-coils 103, 104 are not limited to ones indicated in FIG. 7. Thus, while FIG. 7 illustrates the serial connections from the middle node of the first arm 401 through the resonance capacitors 80a, 80b, the inner ends of the sub-coils 101, 103, and the inner ends of the sub-coils 102, 104 to the middle nodes of the second and third arms, respectively, the serial connections may be established from the middle node of the first arm 401 through the inner ends of the sub-coils 101, 103, the inner ends of the sub-coils 102, 104, and the resonance capacitors 80a, 80b to the middle nodes of the second and third arms, respectively.

In the parallel mode as illustrated in FIG. 8, as the high-frequency currents run through each of the sub-coils 101 to 104 of the heating coil 100 in the same direction, the magnetic field generated by each of the sub-coils is reinforced in the regions where the sub-coils are close to each other, thereby improving an efficiency for heating the pan P, reducing the circuit loss of the driver 40, and down-sizing the cooling mechanism (such as a cooling fan and a heatsink) for cooling the driver 40.

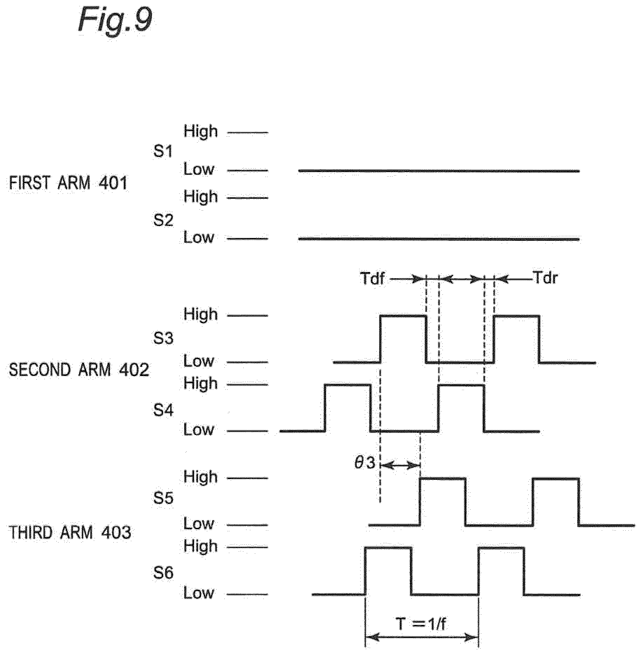

FIG. 9 is a timing chart of the control signals S1 to S6 controlling the first and second drive circuitries 40a, 40b in a different drive mode. As shown in FIG. 9, the control signals S1, S2 for controlling the semiconductor switching elements 401a, 401b of the first arm 401 are kept at Low-level (Off-condition). The dead-times Tdr, Tdf and the phase relationship of the control signals S3, S4 and S5, S6 are similar to those described with reference to FIG. 6, and therefore duplicate description will be abbreviated herein. For example, in FIG. 9, when the control signal S3 is at High-level, the semiconductor switching element 402a of the second arm 402 is switched to ON-condition, and when at Low-level, it is switched to OFF-condition.

As illustrated in the timing chart of FIG. 9, when the control signals S1, S2 are kept at Low-level, the semiconductor switching elements 401a, 401b of the first arm 401 are remained at Off-condition (Non-conductive condition). Also the control signals S3, S4 and S5, S6 as shown control only the semiconductor switching elements 402a, 402b of the second arm 402 and the semiconductor switching elements 403a, 403b of the third arm 403 of FIG. 5.

Meanwhile, the heated body such as a pan and a pot commercialized for the induction heating cooker may integrally be formed of the same metal material, or alternatively, a relatively reasonable pan may include a bottom central portion contacting onto the top plate 3 which is made of magnetic material such as steel, and a bottom peripheral portion and a circumference wall portion which are made of non-magnetic material such as aluminum. The pan P composed of different portions made of magnetic material and non-magnetic material is conveniently referred to as the pan P of composite material hereinafter.

When the pan P of composite material stands on the IH heating unit 10 of the present invention, the constituent material of the pan P opposing to the sub-coils 101 to 104 may be different from each other. The pan P of composite material is considered as including a body portion, a bottom portion, and a disc (circular plate) made of magnetic material having a diameter of about 16 cm is adhered in the middle of the bottom portion.

On the other hand, the heating coil 100 of FIG. 2B is considered as having a diameter, for example, of about 24 cm, including the sub-coil 103 having an inner diameter of about 15 cm, and the sub-coil 104 having an inner diameter of about 20 cm. The magnetic disc of the pan P of composite material covers wholly the sub-coils 101, 102 and the sub-coil 103 partially. The non-magnetic portion of the pan P, if having a diameter of about 20 cm or greater, covers the remaining part of the sub-coil 103 and the sub-coil 104 wholly or partially. The non-magnetic portion of the pan P, if having a diameter of less than about 20 cm, does not cover the sub-coil 104 (thus causing the non-load condition for the sub-coil 104).

Under this circumstance, when the detecting means 60a, 60b detect the load characteristics of the central coil (sub-coils 101, 102) and the peripheral coil (sub-coils 103, 104), the load characteristics obtained based upon the electric characteristics of the central coil which is magnetically coupled with the magnetic material (e.g., the inductance, the high-frequency current through and the voltage across the central coil) is far different from that of peripheral coil which is magnetically coupled with the non-magnetic material.

The controller 50 compares the load characteristics obtained based upon the electric characteristics of the central and peripheral coils with the predetermined thresholds. For example, among the load characteristics obtained based upon the electric characteristics of the central and peripheral coils, if the difference between the resonance frequencies thereof is greater than the predetermined threshold, then the controller 50 determines that portions of the pan P over the central and peripheral coils are made of materials different from each other, and that the pan P contains the composite material where it is not appropriate to drive the first, second, third arms 401 to 403 at the same driving frequency, and therefore it controls the control signals S1, S2 remained to Low-level, and outputs the control signals S3 to S6 to the semiconductor switching elements of the second and third arms.

Thus, the controller 50 is adapted to control the control signals S3-S6 to operate the full-bridge inverter which comprises the second and third arms 402, 403, the resonance capacitors 80a, 80b, and the sub-coils 101 to 104. More particularly, as illustrated in FIG. 9, the control signals S1, S2 are kept at Low-level to maintain the first arm 401 in the disenable condition, the control signals S3, S4 are controlled for the semiconductor switching elements 402a, 402b of the second arm 402, and the control signals S5, S6 are controlled for the semiconductor switching elements 403a, 403b of the third arm 403.

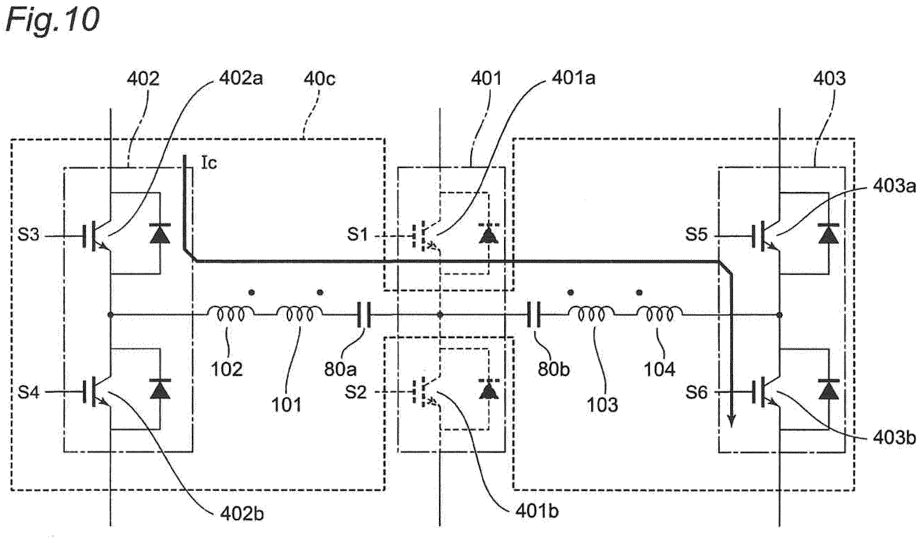

FIG. 10 is a circuit diagram of the driver 40 according to the present invention, which is similar to FIG. 7. Similar reference numerals are used for indicating components having similar functions. As shown, the resonance capacitors 80a, 80b and the sub-coils 101 to 104, which are connected in series and between the middle nodes of the second and third arms 402, 403, partially build the full-bridge inverter (third drive circuitry 40c), and therefore, the high-frequency current runs through the sub-coils 101 to 104 in an amount depending upon the phase differential θ3 (FIG. 9) between the control signal S3 (S4) and the control signal S5 (S6).

As discussed above, a method (mode) for controlling the driver 40 including the first arm 401 kept disenable and the second and third arms 402, 403 having the middle nodes connected through the resonance capacitors 80a, 80b and the sub-coils 101 to 104 in series for supplying the high-frequency current Ic is referred to as a "serial drive mode" in the present disclosure. In other words, the serial drive mode is the drive mode for controlling the driver 40 so that the central coil and the peripheral coil are connected in series across the power source 30.

In the serial drive mode, the controller 50 again determines the frequency f of the control signals S3-S6 for controlling the full-bridge inverter (third drive circuitry 40c) including the second and third arms 402, 403, the sub-coils 101 to 104, and the resonance capacitors 80a, 80b, in accordance with the load characteristics detected by the detecting means 60a, 60b.

The method for determining the driving frequency fsw upon calculation of the resonance frequency f0 in accordance with the load characteristics (electric characteristics) will be described hereinafter. The controller 50 may select the driving frequency fsw appropriate to the load characteristics of the first and second drive circuitries 40a, 40b detected by the detecting means 60a, 60b, respectively, from some predetermined driving frequencies for the given load characteristics obtained based upon the electric characteristics thereof.

The resonance frequency f0c of the serial resonance load circuit containing the second and third arms 402, 403, the sub-coils 101 to 104, and the resonance capacitors 80a, 80b can be determined by the inductance La, Lb and the capacitance Ca, Cb of the central and peripheral coils, as expressed in the following formula.

Formula 3

$$f0c = \frac{1}{2 \cdot \pi \cdot \sqrt{(La + Lb) \times \left(\dfrac{Ca \times Cb}{Ca + Cb}\right)}}$$

The controller 50 determines the driving frequency fsw of the drive circuitry 40c as being greater than the resonance frequency f0c by a predetermined minute value Δf. The predetermined minute value Δf may preferably be 1 kHz or more, and may be set in accordance with the electric characteristics varied depending upon the standing condition of the pan P so that the circuit loss of the driver 40 is reduced.

In the circuit architecture of the drive circuitry 40c of FIG. 10, the total inductance of the heating coil including all of the sub-coils 101 to 104 in series is increased, but the total capacitance of the capacitors 80a, 80b in series is decreased, therefore the resonance frequency f0c of the drive circuitry 40c of FIG. 10 is close to and almost the same as to the resonance frequency f0a, f0b of the first and second drive circuitries 40a, 40b in the parallel drive mode. If the inductance La and the capacitance Ca of the central coil and the inductance Lb and the capacitance Cb of the peripheral coil are originally selected so that the resonance frequency f0a, f0b of the first and second drive circuitries 40a, 40b are close to each other, and for example, if the inductances La, Lb thereof are equal (La = Lb = L) and the capacitances Ca, Cb thereof are equal (Ca = Cb = C), then the resonance frequencies f0a, f0b of the first and second drive circuitries 40a, 40b can be obtained by the following formula.

Formula 4

$$f0a = f0b = \frac{1}{2 \cdot \pi \cdot \sqrt{L \times C}}$$

On the other hand, the resonance frequency f0c of the third drive circuitry 40c can be obtained by the following formula.

Formula 5

$$f0c = \cfrac{1}{2 \cdot \pi \cdot \sqrt{(L+L) \times \left(\cfrac{C \times C}{C+C}\right)}} = \cfrac{1}{2 \cdot \pi \cdot \sqrt{2L \times \cfrac{C}{2}}}$$

$$= \cfrac{1}{2 \cdot \pi \cdot \sqrt{L \times C}}$$

As clear from the above Formula 4 and Formula 5, even if the control mode is switched from the parallel drive mode where the first and second drive circuitries 40a, 40b are simultaneously driven in the serial drive mode where the third drive circuitry 40c is driven, the resonance frequency f0c of the third drive circuitry 40c is consistent with the resonance frequency f0a, f0b of the first and second drive circuitries 40a, 40b. Therefore, it is not necessary to increase various types of the predetermined data for controller 50 to determine from the electric characteristics and to increase the memory capacity of the CPU due to adaptation of the serial drive mode.

In FIG. 10, the resonance capacitor 80a has one end connected to the middle node between the higher-voltage semiconductor switching element 401a and the lower-voltage semiconductor switching element 401b of the first arm 401, and the other end connected to the inner end (one end closer to the center of the wound coil) of the sub-coil 101 of the central coil. In FIG. 10, the inner ends (one end closer to the center of the wound coil) of the sub-coils 101 to 104 are indicated by solid circles.

The outer end of the sub-coil 101 is connected to the inner end (one end closer to the center of the wound coil) of the sub-coil 102, and the outer end of the sub-coil 102 is connected to the middle node between the higher-voltage semiconductor switching element 402a and the lower-voltage semiconductor switching element 402b of the second arm 402. Thus, the central coil (sub-coils 101, 102) and the first resonance capacitor 80a are connected in series between the middle nodes of the first and second arms 401, 402.

Similarly, in FIG. 10, the resonance capacitor 80b has one end connected to the middle node between the higher-voltage semiconductor switching element 401a and the lower-voltage semiconductor switching element 401b of the first arm 401, and the other end connected to the inner end (one end closer to the center of the wound coil) of the sub-coil 103 of the peripheral coil.

Furthermore, the outer end of the sub-coil 103 is connected to the inner end (one end closer to the center of the wound coil) of the sub-coil 104, and the outer end of the sub-coil 104 is connected to the middle node between the higher-voltage semiconductor switching element 403a and the lower-voltage semiconductor switching element 403b of the third arm 403. Thus, the peripheral coil (sub-coils 103, 104) and the second resonance capacitor 80b are connected in series between the middle nodes of the first and third arms 401, 403.

As shown in FIG. 10, the controller 50 (not shown therein) outputs the Low-level control signals S1, S2 to the first am 401 so that the semiconductor switching elements 401a, 401b of the first arm 401 are kept in Off-condition (Non-conductive condition). Also the controller 50 outputs the control signals S3-S6 as shown in the timing chart of FIG. 9 for driving the semiconductor switching elements 402a, 402b, 403a, 403b.

In this situation, the high-frequency current Ic runs through the sub-coils 101, 102 connected in series, the resonance capacitors 80a, 80b, and the sub-coils 103, 104 connected in series. Thus, the high-frequency current Ic runs through the full-bridge circuit (third drive circuitry 40c) but not through the first arm 401. As discussed above, a method (mode) for controlling the driver 40 including the first arm 401 kept disenable with the central coil and the peripheral coil connected in series for supplying the high-frequency current Ic is referred to as a "serial drive mode" in the present disclosure.

The high-frequency current Ic is illustrated in FIG. 10 as running from the higher-voltage semiconductor switching element 402a of the second arm 402 through the lower-voltage semiconductor switching element 403b of the third arm. However, it is needless to mention, in the reverse phase, the high-frequency current Ic runs from the higher-voltage semiconductor switching element 403a of the third arm 403 through the lower-voltage semiconductor switching element 402b of the second arm 402.

The amount of the high-frequency current Ic is determined by the phase difference θ3 ( > 0) between the control signals S3, S5 (or between the control signals S4, S6). The greater phase difference θ3 causes more amount of the high-frequency current through the sub-coils 101 to 104. The controller 50 is adapted to control the phase difference θ3 so as to achieve the heating power selected by the user via the upper console 5 or the front console 6.

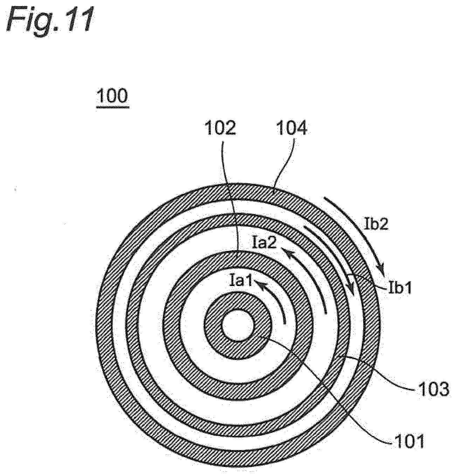

FIG. 11 is a top plan view similar to FIG. 2B showing the heating coil 100 with directions of the high-frequency current running through each of the sub-coils 101 to 104 thereof. FIG. 11 indicates the directions of the high-frequency current running through each of the sub-coils 101 to 104 of the heating coil 100 by arrows Ia1, Ia2, Ib1, Ib2, respectively. As the sub-coils 101 to 104 are connected in series, the amount of the high-frequency current therethrough is equal to Ic (Ia1 = Ia2 = Ia = Ib1 = Ib2 = Ic).

Each of the sub-coils 101 to 104 is wound from the inner end and for example in a clockwise manner in FIG. 8. However, each of the sub-coils 101 to 104 may also be wound in the same counter-clockwise manner.

When focusing on the inner ends of the sub-coils 101 to 104 shown in FIG. 10, at a particular phase within one cycle T (= 1/f, f: the driving frequency fsw), the high-frequency current Ic runs from the second arm 402 through the outer end of the sub-coil 102, the inner end of the sub-coil 102, the outer end of the sub-coil 101, and the inner end of the sub-coil 101 to the resonance capacitor 80a. As the first arm 401 is in Non-conductive condition because of the control signals S1, S2 at Low-level, the high-frequency current Ic further runs from the middle node of the first arm 401 through the resonance capacitor 80b, the inner end of the sub-coil 103, the outer end of the sub-coil 103, the inner end of the sub-coil 104, and the outer end of the sub-coil 104 to the third arm 403. The direction of the high-frequency current Ic supplied to the sub-coils 101 to 104 are switched alternately within one cycle of the control signals S3-S6 output from the controller 50 to the driver 40.

As the sub-coils 101, 102 of FIG. 11 are wound in a clockwise direction, the high-frequency current Ic runs from the outer end of the sub-coil 102 in a counter-clockwise direction, through the outer end of the sub-coil 101 in a counter-clockwise direction towards the center thereof, at a particular phase within one cycle T ( = 1/fsw), as indicated by the arrows of Ia1, Ia2 in FIG. 11.

As the sub-coils 103, 104 of FIG. 11 are wound also in a clockwise direction, the high-frequency current Ic runs at the same phase within one cycle T, from the inner end of the sub-coil 103 in a clockwise direction, through the inner end of the sub-coil 104 in a clockwise direction, as indicated by the arrows of Ib1, Ib2 in FIG. 11. Thus, in FIG. 11, the high-frequency current Ic runs sequentially through Ia2, Ia1, Ib1, and Ib2. It should be noted that the connection orders among the resonance capacitor 80a and the sub-coils 101, 102 and among the resonance capacitor 80b and the sub-coils 103, 104 are not limited to ones indicated in FIG. 11.

As the driver 40 of the present invention is structured as described above, when the central and peripheral portions of the pan P is formed of metal materials different from each other, the central and peripheral coils cannot be driven effectively by the high-frequency current of the same driving frequency because of the different load characteristics (electric characteristics) of the central and peripheral coils. Also even if the high-frequency current of the same driving frequency is intended to drive the central and peripheral coils by in parallel (individually) to avoid the interfering noise, the deviation between the resonance frequency and the driving frequencies of the central and peripheral coils causes an unbalanced amount of the high-frequency current, thereby to cause the heating deviation of the pan P depending upon the position thereof.

However, in the serial drive mode maintaining the first drive circuitry 40a in Off-condition, the controller 50 of the present invention controls the driver 40 (second and third arms 402, 403) to drive the sub-coils 101 to 104 as a single coil, while the detecting means 60 detects the complex load characteristics of the single heated body for the central and peripheral portions of the pan P as a whole, it can control the second and third arms 402, 403 to supply the high-frequency current of the same frequency f.

Thus, according to the present invention, the high-frequency current of the frequency f same as the driving frequency fsw can be supplied to the sub-coils 101 to 104 in a quite simply manner by switching the first drive circuitry 40a in the OFF-condition without incorporating a complicated and expensive device such as a relay as taught by the aforementioned Patent Documents 1 and 2. Also the circuit configuration in the serial drive mode can readily be achieved by controlling the combination of the control signals S1-S6 without use of an undesirable a switching circuit.

Also as illustrated in FIG. 11, the high-frequency current Ic runs subsequently through the sub-coils 101 to 104, and the directions thereof through the sub-coils 102, 103 are opposite, so that the magnetic field in the region adjacent to the those sub-coils are cancelled or weaken by each other so that the pan P is heated evenly.

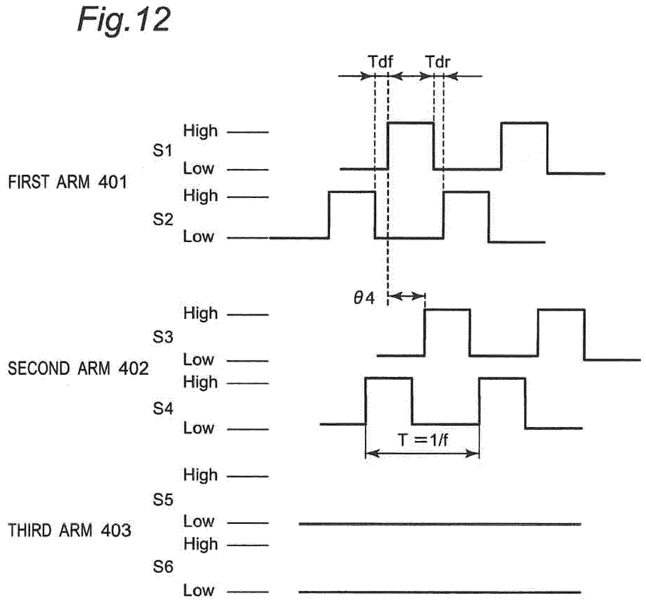

FIG. 12 is a timing chart of the control signals S1-S6 driving the first and second drive circuitries 40a, 40b in another drive mode. In FIG. 12, the control signals S5, S6 for controlling the semiconductor elements 403a, 403b of the third arm 403 are maintained at Low-level (Off-condition). The dead-times Tdr, Tdf and the phase relationship of the control signals S1, S2 and S3, S4 are similar to those described with reference to FIG. 6, and therefore duplicate description will be abbreviated herein. For example, in FIG. 12, when the control signal S3 is at High-level, the semiconductor switching element 402a of the second arm 402 is switched to ON-condition, and when at Low-level, it is switched to OFF-condition.

As illustrated in the timing chart of FIG. 12, when the control signals S5, S6 are kept at Low-level, the semiconductor switching elements 403a, 403b of the third arm 403 are remained at Off-condition (Non-conductive condition). Also the control signals S1, S2 and S3, S4 as shown control only the semiconductor switching elements 401a, 401b of the first arm 401 and the semiconductor switching elements 402a, 402b of the second arm 402 of FIG. 5.

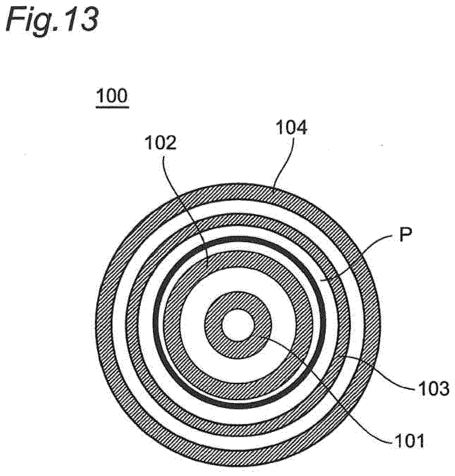

FIG. 13 is a top plan view similar to Fig.2A illustrating the heating coil 100 and as well as the pan P by a solid thick circle when it has a small size similar to the outer diameter of the central coil (sub-coils 101, 102) standing over the IH heating unit 10 of the present invention. When the small pan P stands over the heating coil 100 via the top plate 3, there is nothing over the sub-coils 103, 104, which causes the non-load condition for the sub-coils 103, 104.

In this situation, when the detecting means 60a, 60b detects the load characteristics of the central coil (sub-coils 101, 102) and the peripheral coil (sub-coils 103, 104), the load characteristics (electric characteristics) of the central coil which is magnetically coupled with the metal material of the small pan P is far different from that of the peripheral coil over which the small pan P does not stand.

The controller 50 is adapted to compare the load characteristics (electric characteristics) of the central and peripheral coils with the predetermined thresholds. If the controller 50 determines that the small pan P standing over the central coil (sub-coils 101, 102) but not over the peripheral coil (sub-coils 103, 104), then it controls the control signals S5, S6 maintained at Low-level, and outputs the control signals S1 to S4 to the semiconductor switching elements of the first and second arms 401, 402 as illustrated in FIG. 12 so as to drive only the first drive circuitry 40a. The high-frequency current Id runs through the central coil (sub-coils 101, 102) and the resonance capacitor 80 in an amount which is determined by the phase difference θ4 ( > 0) between the control signals S3, S5 (or between the control signals S4, S6).

The greater phase difference θ4 causes more amount of the high-frequency current through the central coil (sub-coils 101, 102). The controller 50 is adapted to control the phase difference θ4 so as to achieve the heating power selected by the user via the upper console 5 or the front console 6. A method (mode) for controlling the driver 40 to maintain the third arm 403 at Non-conductive condition and to supply the high-frequency current to the central coil only is referred to as an "individual drive mode" in the present disclosure.

In the individual drive mode, the controller 50 determines the frequency f of the control signals S1-S4 for controlling the full-bridge inverter (first drive circuitry 40a) including the first and second arms 401, 402, the sub-coils 101, 102, and the resonance capacitor 80a in accordance with the load characteristics detected by the detecting means 60a.

The method for determining the driving frequency fsw upon calculation of the resonance frequency f0 in accordance with the load characteristics (electric characteristics) will be described hereinafter. For example, the controller may select the driving frequency fsw appropriate to the load characteristics obtained based upon the electric characteristics of the first drive circuitry 40a detected by the detecting means 60a, from some predetermined driving frequencies for the given load characteristics.

The resonance frequency f0d of the serial resonance load circuit containing the first and second arms 401, 402, the sub-coils 101, 102, and the resonance capacitors 80a can be determined by the inductance La and the capacitance Ca of the central coil, as expressed in the following formula.

Formula 6

$$f0d = \frac{1}{2 \cdot \pi \cdot \sqrt{La \times Ca}}$$

The controller 50 determines the driving frequency fsw of the drive circuitry 40a as being greater than the resonance frequency f0d by a predetermined minute value Δf. The predetermined minute value Δf may preferably be 1 kHz or more, and may be set in accordance with the electric characteristics varied depending upon the standing condition of the pan P so that the circuit loss of the driver 40 is reduced.

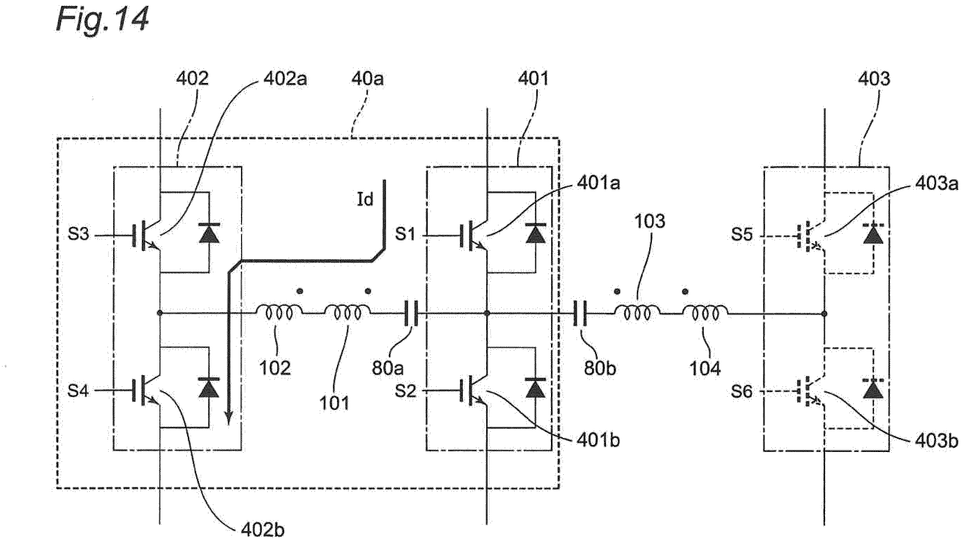

FIG. 14 is a circuit diagram of the driver 40 according to the present invention, which is similar to FIG. 7. Similar reference numerals are used for indicating components having similar functions. In FIG. 14, the resonance capacitor 80a and the inner ends of sub-coils 101, 102 are connected in series and between the middle nodes of the first and second arms 401, 402. Also in FIG. 14, the resonance capacitor 80a and the inner ends of sub-coils 103, 104, which are connected in series and between the middle nodes of the second and third arms 402, 403. In FIG. 14, the inner ends (one end closer to the center of the wound coil) of the sub-coils 101 to 104 are indicated by solid circles.

Thus, the controller 50 is adapted to control the control signals S1-S4 to operate the full-bridge inverter which comprises the first and second arms 401, 402, the resonance capacitor 80a, and the sub-coils 101, 102. More particularly, as illustrated in FIG. 12, the control signals S5, S6 are kept at Low-level to maintain the third arm 403 in the disenable condition, the control signals S1, S2 are controlled for the semiconductor switching elements 401a, 401b of the first arm 401, and the control signals S3, S4 are controlled for the semiconductor switching elements 402a, 402b of the second arm 402.

The high-frequency current Id is illustrated in FIG. 14 as running from the higher-voltage semiconductor switching element 401a of the first arm 401 through the lower-voltage semiconductor switching element 402b of the second arm 402. However, it is needless to mention, in the reverse phase, the high-frequency current Id runs from the higher-voltage semiconductor switching element 402a of the second arm 402 through the lower-voltage semiconductor switching element 401b of the first arm 401.

The amount of the high-frequency current Id is determined by the phase difference θ4 ( > 0) between the control signals S1, S3 (or between the control signals S2, S4). The greater phase difference θ4 causes more amount of the high-frequency current through the sub-coils 101, 102. The controller 50 is adapted to control the phase difference θ4 so as to achieve the heating power selected by the user via the upper console 5 or the front console 6.

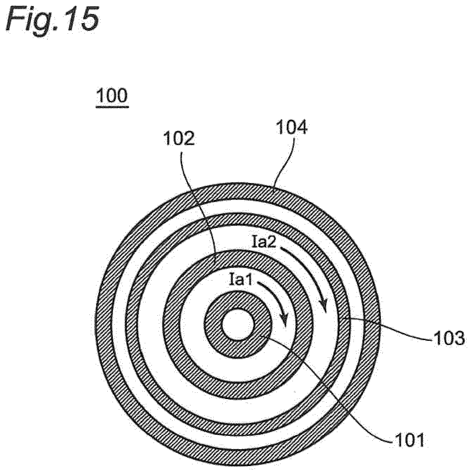

FIG. 15 is a top plan view similar to FIG. 2B showing the heating coil 100 with directions of the high-frequency current running through the sub-coils 101, 102 thereof. FIG. 15 indicates the directions of the high-frequency current running through the sub-coils 101, 102 of the heating coil 100 by arrows Ia1, Ia2, respectively. As the sub-coils 101, 102 are connected in series, the amount of the high-frequency current therethrough is equal to Id (Ia1 = Ia2 = Id). It should be noted that since the third arm is kept in the disenable condition, no high-frequency current runs through the sub-coils 103, 104.

As the driver 40 of the present invention is structured as described above, when the pan P smaller than the sub-coil 103 of the peripheral coil stands over the IH heating unit 10, the controller 50 controls the first and second 401, 402 to supply the high-frequency current to the sub-coils 101, 102 in the individual drive mode keeping the third drive circuitry 40c in Off-condition, without incorporating a complicated and expensive device. Also the circuit architecture in the individual drive mode can readily be achieved by controlling the combination of the control signals S1-S6 without use of an undesirable a switching circuit.

Furthermore, according to the present invention, cease of the high-frequency current through the peripheral coil over which the pan P does not stand causes reduction of undesirable power consumption and facilitates driving in an efficient manner. In addition, according to the present invention, undesirable magnetic flux from the peripheral coil is avoided and the circuit loss of the drive circuitry is reduced, so that the cooling system of the IH cooker may be downsized.

With reference to FIGs. 12 and 13, the individual drive mode is discussed for the case where the heated body standing on the top plate 3 is the small pan P and the controller 50 controls the drive circuitry 40a individually to supply the high-frequency current only to the sub-coils 101, 102. However, although depending upon a cooking recipe, when the user desires to heat mainly the peripheral bottom portion of the pan P, the controller 50 may control the drive circuitry 40b individually instead of the drive circuitry 40a. In the latter case, the controller may control the second arm 402 to be kept in the disenable condition, and control the first and third arms 401, 403 to supply the high-frequency current for heating exclusively the peripheral bottom portion of the pan P. Thus, the individual drive mode of the present invention includes the control method for controlling the driver 40 to supply exclusively to the central coil and as well as to supply exclusively to the peripheral coil.

It should be noted that the heated body, namely the pan P, may be any type of pans such as a pot and a flying pan, as far as being made of material which can be inductively heated, thereby achieving the similar advantages.

Embodiment 2.

Referring to FIGs. 7, 10, and 16 to 17, the second embodiment of the induction-heating cooker according to the present invention will be described herein. The induction-heating cooker 1 of the second embodiment is similar to that of the first embodiment except the central and peripheral coils being would in the direction different from each other while in the same direction according to the first embodiment. Therefore, the duplicated description in detail for the common features of the induction-heating cooker 1 will be abbreviated.

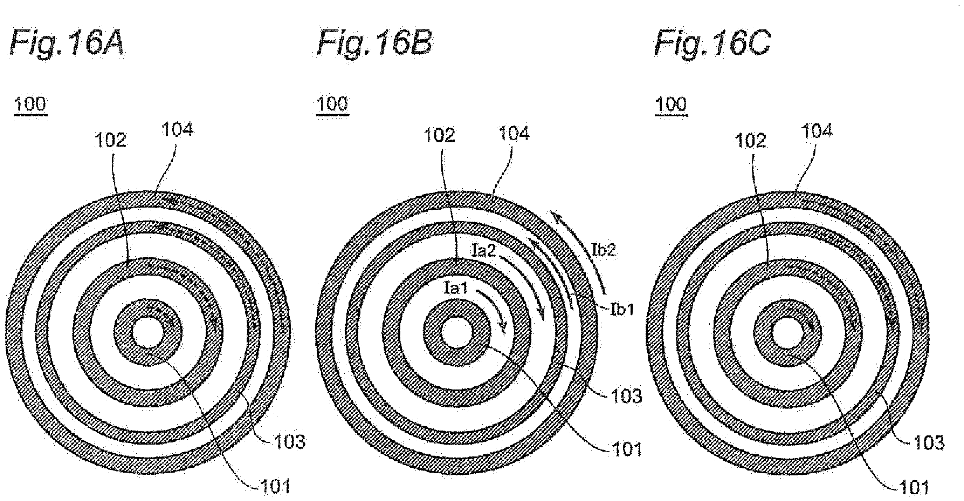

FIGs. 16A to 16C are top plan views similar to FIG. 2A, illustrating exemplary structure of the heating coils 100 of the second embodiment, also including a plurality of sub-coils formed by winding a linear conductor such as a litz-wire, each of which is arranged in a concentric fashion.

Each of the sub-coils 101 to 104 are formed consistently by winding the linear conductor from the radially inner end towards the radially outer end, the central coil (sub-coils 101, 102) is formed by winding the linear conductor in the clockwise direction while the peripheral coil (sub-coils 103, 104) is formed by winding it in the counter-clockwise direction, as illustrated by arrows with broken lines of Fig.16A. Thus the linear conductors forming the central coil and the peripheral coil of the second embodiment are wound in the directions different from each other. Similar reference numerals are used for indicating components having similar functions.

Referring back to FIG. 7, the directions running through the heating coil 100 formed as shown in FIG. 16A for heating the heated body such as a pan P will be described hereinafter. Firstly the aforementioned parallel drive mode will be discussed herein.

When focusing on the inner ends of the sub-coils 101 to 104 shown in FIG. 7, the high-frequency current Ia runs from the first arm 401 through the resonance capacitor 80a and the inner ends of the sub-coils 101, 102 to the second arm 402 at a particular phase within one cycle T, which is indicated by the arrows of Ia1 to Ia2 of FIG. 16B. At the same particular phase, the high-frequency current Ib runs from the first arm 401 through the resonance capacitor 80b and the inner ends of the sub-coils 103, 104 to the third arm 403, which is indicated by the arrows of Ib1to Ib2 of

FIG. 16B. It should be noted that in another phase within one cycle T, the high-frequency currents Ia, Ib run through the sub-coils 101 to 104 in the alternate directions.

FIG. 16B indicates the directions of the high-frequency current running through each of the sub-coils 101 to 104 of the heating coil 100 by arrows Ia1, Ia2, Ib1, Ib2, respectively. As the sub-coils 101, 102 and the sub-coils 103, 104 are connected in series, the amount of the high-frequency current therethrough are equal to Ia and Ib, respectively (Ia1 = Ia2 = Ia, Ib1 = Ib2 = Ib).

As described above, since the sub-coils 101, 102 and the sub-coils 103, 104 are wound in the clockwise and counter-clockwise direction, respectively, at a particular phase, the high-frequency currents Ia1, Ia2 run through the sub-coils 101, 102 in the clockwise direction while the high-frequency currents Ib1, Ib2 run through the sub-coils 103, 104 in the counter-clockwise direction.

In the parallel drive mode of the heating coil 100 according to the second embodiment, the high-frequency currents run through the central coil (sub-coils 101, 102) and the peripheral coil (sub-coils 103, 104) in the directions opposite to each other, so that the magnetic field in the region adjacent to the sub-coils 102, 103 are cancelled or weaken by each other so that the pan P is heated evenly. Therefore, the heating coil 100 according to the second embodiment may be used in the parallel drive mode to heat the pan P in an even or uniform manner, thereby to enhance the cooking performance.

Next, referring back to FIG. 10, the directions running through the heating coil 100 formed as shown in FIG. 16A for heating the heated body such as a pan P in the serial drive mode will be described hereinafter.

In the serial drive mode, when focusing on the inner ends of the sub-coils 101 to 104 shown in FIG. 10, at a particular phase within one cycle T, the high-frequency current Ic runs from the second arm 402 through the outer end of the sub-coil 102, the inner end of the sub-coil 102, the outer end of the sub-coil 101, and the inner end of the sub-coil 101 to the resonance capacitor 80a. As the first arm 401 is in Non-conductive condition in the serial drive mode, the high-frequency current Ic further runs from the middle node of the first arm 401 through the resonance capacitor 80b, the inner end of the sub-coil 103, the outer end of the sub-coil 103, the inner end of the sub-coil 104, and the outer end of the sub-coil 104 to the third arm 403. The direction of the high-frequency current Ic supplied to the sub-coils 101 to 104 are switched alternately.

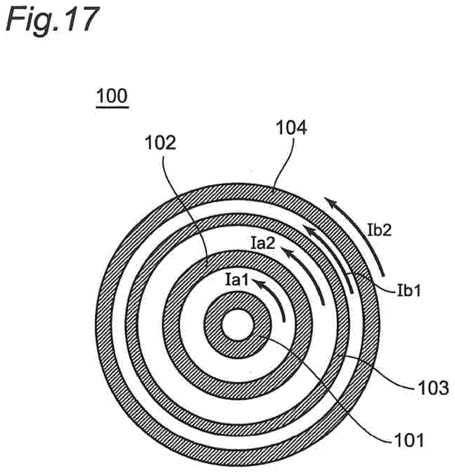

FIG. 17 is a top plan view of the heating coil 100 showing directions of the high-frequency current running through each of the sub-coils 101 to 104 when heating the pan P in the serial drive mode. FIG. 17 indicates the directions of the high-frequency current running through each of the sub-coils 101 to 104 of the heating coil 100 by arrows Ia1, Ia2, Ib1, Ib2, respectively. As the sub-coils 101 to 104 are connected in series, the amount of the high-frequency current therethrough is equal to Ic (Ia1 = Ia2 = Ia = Ib1 = Ib2 = Ic).

As described above, the sub-coils 101, 102 are wound in a clockwise manner while the sub-coils 103, 104 are wound in a counter-clockwise manner, and therefore as shown in FIG. 17, the high-frequency current Ia1, Ia2 (i.e., Ic) run through the sub-coils 101, 102 in a counter-clockwise manner along the winding direction of the conductive wire at a particular phase, and the high-frequency current Ib1, Ib2 (i.e., Ic) run through the sub-coils 103, 104 in a clockwise manner. Thus, in FIG. 17, the high-frequency current Ic runs sequentially through Ia2, Ia1, Ib1, and Ib2.

As illustrated in FIG. 17, in the serial drive mode according to the second embodiment, as the high-frequency current run through each of the sub-coils 101 to 104 of the heating coil 100 in the same direction, the magnetic field generated by each of the sub-coils is reinforced in the regions where the sub-coils 101 to 104 are close to each other, thereby improving an efficiency for heating the pan P, reducing the circuit loss of the driver 40, and down-sizing the cooling mechanism (such as a cooling fan and a heatsink) for cooling the driver 40.

Therefore, the heating coil 100 according to the second embodiment may be used in the serial drive mode to heat the pan P of complex material containing magnetic and non-magnetic material with the reinforced magnetic field, thereby to enhance the cooking performance. It should be noted that when the pan P is made of single metal material, if the reinforced magnetic field is desirable to heat the pan P, the controller 50 may control the driver 40 in the serial drive mode.

Also the controller 50 can readily achieve the circuit configuration corresponding to the desired drive mode by controlling the combination of the control signals S1-S6 without use of an undesirable a switching circuit. According to the second embodiment, the heated body, namely the pan P, may be any type of pans such as a pot and a flying pan, as far as being made of material which can be inductively heated, thereby achieving the similar advantages.

Furthermore, in the second embodiment, when the heated body standing on the top plate 3 is a small pan P, it can be heated in the individual mode by means of the heating coil 100 structured as illustrated in FIG. 16A, thereby to perform the same operations with the advantages similar to those of the first embodiment, which will not further be described herein in detail.

Embodiment 3.

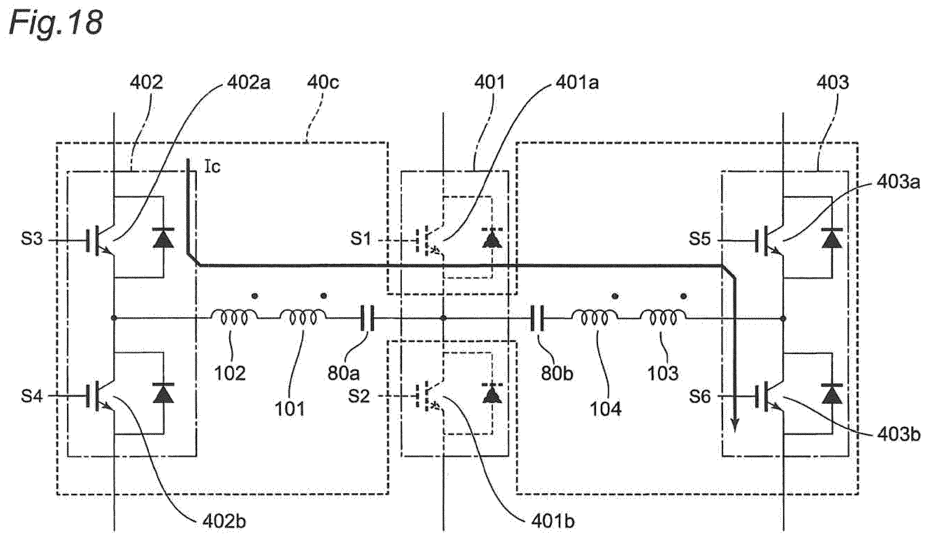

Referring to FIGs. 16 to 18, the third embodiment of the induction-heating cooker according to the present invention will be described herein. FIG. 18 is a circuit diagram of the driver 40 according to the third embodiment, similar to the electric circuit of FIG. 10. Thus, the driver 40 of FIG. 18 is similar to that of FIG. 10 except the arrangement of the sub-coils 103, 104 and the positions of the inner and outer ends relative to the middle nodes being switched relative to ones of FIG. 10. Therefore, the duplicated description in detail for the common features of the induction-heating cooker will be abbreviated.

The operation of the heating coil 100 of FIG. 16C connected to the driver circuitries of FIG. 18 for heating the pan P in the parallel drive mode will be described hereinafter. The ways or manners to form the sub-coils 101 to 104 of the heating coil 100 by winding the conductive wires, to connect the sub-coils with the circuitries of FIG. 18, and to adjust the amount of the high-frequency current are the same as those as described above for the parallel drive mode, and therefore will not be further described.

When focusing on the inner ends of the sub-coils 101 to 104 shown in FIG. 18, the high-frequency current Ia (not shown) runs from the first arm 401 through the resonance capacitor 80a and the inner ends of the sub-coils 101, 102 to the second arm 402 at a particular phase within one cycle T similar to the high-frequency current Ia as described with FIG. 7, which is indicated by the arrows of Ia1 to Ia2 of FIG. 16B. At the same particular phase, the high-frequency current Ib runs from the first arm 401 through the resonance capacitor 80b and the outer ends of the sub-coils 103, 104 to the third arm 403, which is indicated by the arrows of Ib1to Ib2 of FIG. 16B. It should be noted that in another phase within one cycle T, the high-frequency current Ia, Ib run through the sub-coils 101 to 104 in the alternate directions.

FIG. 16B indicates the directions of the high-frequency current running through each of the sub-coils 101 to 104 of the heating coil 100 by arrows Ia1, Ia2, Ib1, Ib2, respectively. As the sub-coils 101, 102 and the sub-coils 103, 104 are connected in series, the amount of the high-frequency current therethrough are equal to Ia and Ib (Ia1 = Ia2 = Ia, Ib1 = Ib2 = Ib), respectively.

Since the sub-coils 101 to 104 are wound in the clockwise direction as illustrated in FIG. 16C, at a particular phase within one cycle T, the high-frequency current Ia1, Ia2 runs through the sub-coils 101, 102 in the clockwise direction while the high-frequency current Ib1, Ib2 runs through the sub-coils 103, 104 in the counter-clockwise direction as illustrated in FIG. 16B.

In the parallel drive mode of the heating coil 100 according to the third embodiment, the high-frequency currents run through the central coil (sub-coils 101, 102) and the peripheral coil (sub-coils 103, 104) in the directions opposite to each other, so that the magnetic field in the region adjacent to the those sub-coils 102, 103 are cancelled or weaken by each other so that the pan P is heated evenly. Therefore, the heating coil 100 according to the third embodiment may be used in the parallel drive mode to heat the pan P in an even or uniform manner, thereby to enhance the cooking performance.

Also the controller 50 can readily achieve the circuit configuration by controlling the combination of the control signals S1-S6 without use of an undesirable a switching circuit in FIG. 18.

Next, the operation of the heating coil 100 of FIG. 16C connected to the driver circuitries of FIG. 18 for heating the pan P in the serial drive mode will be described hereinafter. Each of the sub-coils 101 to 104 of FIG. 16C are formed by winding the conductive wire from the inner end to the outer end, for example in the clockwise direction (similar to those of FIG. 2). It should be noted that the winding directions may be counter-clockwise, as far as each of the sub-coils is wound in the same direction. FIG. 18 is a circuit diagram of the driver 40 for heating the pan P in the serial drive mode according to the third embodiment. Similar reference numerals are used for indicating components having similar functions.

In the serial drive mode, when focusing on the inner ends of the sub-coils 101 to 104 shown in FIG. 18, at a particular phase within one cycle T, the high-frequency current Ic runs from the second arm 402 through the outer end of the sub-coil 102, the inner end of the sub-coil 102, the outer end of the sub-coil 101, and the inner end of the sub-coil 101 to the resonance capacitor 80a. As the first arm 401 is in Non-conductive condition in the serial drive mode because of the control signals S1, S2 output from the controller 50 (not shown) being kept at Low-level, the high-frequency current Ic further runs from the middle node of the first arm 401 through the resonance capacitor 80b, the outer end of the sub-coil 104, the inner end of the sub-coil 104, the outer end of the sub-coil 103, and the inner end of the sub-coil 103 to the third arm 403. However, it is needless to mention, in the reverse phase, the high-frequency current Ic runs from the higher-voltage semiconductor switching element 403a of the third arm through the lower-voltage semiconductor switching element 402b of the second arm 402.

The amount of the high-frequency current Ic is determined by the phase difference θ3 ( > 0) between the control signals S3, S5 (or between the control signals S4, S6) as illustrated in FIG. 9. The greater phase difference θ3 causes more amount of the high-frequency current through the sub-coils 101 to 104. Although not shown herein, the controller 50 is adapted to control the phase difference θ3 so as to achieve the heating power selected by the user via the upper console 5 or the front console 6.

FIG. 17 is a top plan view of the heating coil 100 of the second embodiment showing directions of the high-frequency current when heating the pan P in the serial drive mode according to the third embodiment (FIG. 18). The high-frequency current Ia2 (i.e., Ic) runs from the outer end of the sub-coil 102 in the counter-clockwise direction through the inner end of the sub-coil 101, and subsequently the high-frequency current Ib2 (i.e., Ic) runs from the outer end of the sub-coil 104 in the counter-clockwise direction along the wound wire and the high-frequency current Ib1 (i.e., Ic) runs through the sub-coil 103. Thus, in FIG. 17, the high-frequency current Ic runs sequentially through Ia2, Ia1, Ib2, and Ib1. Therefore, when the heating coil 100 according to the third embodiment is used to heat the pan P in the serial drive mode, the high-frequency current run through each of the sub-coils 101 to 104 in the same direction.

As illustrated in FIG. 17, in the serial drive mode according to the third embodiment, as the high-frequency current run through each of the sub-coils 101 to 104 of the heating coil 100 in the same direction, the magnetic field generated by each of the sub-coils is reinforced in the regions where the sub-coils are close to each other, thereby improving an efficiency for heating the pan P, reducing the circuit loss of the driver 40, and down-sizing the cooling mechanism (such as a cooling fan and a heatsink) for cooling the driver 40. Therefore, the heating coil 100 according to the third embodiment may be used in the serial drive mode to heat the pan P of complex material containing magnetic and non-magnetic material with the reinforced magnetic field, thereby to enhance the cooking performance. It should be noted that when the pan P is made of single metal material, if the reinforced magnetic field is desirable to heat the pan P, the controller 50 may control the driver 40 in the serial drive mode.

Also the controller 50 can readily achieve the circuit configuration by controlling the combination of the control signals S1-S6 without use of an undesirable a switching circuit. Furthermore, in the third embodiment, the small pan P standing on the top plate can be heated in a similar manner to the first embodiment, thereby to perform the same operations with the advantages similar to those of the first embodiment, which will not be described herein in detail. It should be noted that the heated body, i.e., the pan P may be any type of pans such as a pot and a flying pan, as far as being made of material which can be inductively heated, thereby achieving the similar advantages.

Embodiment 4.

Referring to FIGs. 8, 11, 16 to 18, the fourth embodiment of the induction-heating cooker according to the present invention will be described herein. The induction-heating cooker of the fourth embodiment includes the central and peripheral coils formed by winding the conductive wires in the direction different from each other while the winding directions thereof is the same direction according to the third embodiment. Thus, the induction-heating cooker 1 of the fourth embodiment is similar to that of the third embodiment except the central and peripheral coils being formed by winding the conductive wires in the different directions. Therefore, the duplicated description in detail for the common features of the induction-heating cooker 1 will be abbreviated.

FIG. 18 is a circuit diagram of the driver 40 according to the third embodiment similar to the electric circuit of FIG. 10. The driver 40 of FIG. 18 is similar to that of FIG. 10 except the arrangement of the sub-coils 103, 104 and the positions of the inner and outer ends relative to the middle nodes being switched relative to ones of FIG. 10. Therefore, the duplicated description in detail for the common features of the induction-heating cooker will be abbreviated herein, and similar reference numerals are used for indicating components having similar functions.

The operation of the heating coil 100 of FIG. 16C connected to the driver circuitries of FIG. 18 for heating the pan P in the parallel drive mode will be described hereinafter. The ways or manners to form the sub-coils 101 to 104 of the heating coil 100 by winding the conductive wires, to form the circuitries of FIG. 18, and to adjust the amount of the high-frequency current are the same as those as described above for the parallel drive mode, and therefore will not be further described herein.

When focusing on the inner ends of the sub-coils 101 to 104 shown in FIG. 18, the high-frequency current Ia (not shown) runs from the first arm 401 through the resonance capacitor 80a and the inner ends of the sub-coils 101, 102 to the second arm 402 at a particular phase within one cycle T similar to the high-frequency current Ia as described with FIG. 7, which is indicated by the arrows of Ia1 to Ia2 of FIG. 8. At the same particular phase, the high-frequency current Ib runs from the first arm 401 through the resonance capacitor 80b and the outer ends of the sub-coils 103, 104 to the third arm 403, which is indicated by the arrows of Ib1to Ib2 of FIG. 8. It should be noted that in another phase within one cycle T, the high-frequency current Ia, Ib run through the sub-coils 101 to 104 in the alternate directions.

FIG. 8 indicates the directions of the high-frequency current running through each of the sub-coils 101 to 104 of the heating coil 100 by arrows Ia1, Ia2, Ib1, Ib2, respectively. As the sub-coils 101, 102 and the sub-coils 103, 104 are connected in series, the amount of the high-frequency current therethrough are equal to Ia and Ib (Ia1 = Ia2 = Ia, Ib1 = Ib2 = Ib), respectively.

Since the sub-coils 101, 102 and the sub-coils 103, 104 are wound in the clockwise and counter-clockwise directions as illustrated in FIG. 16A, respectively. Therefore at a particular phase within one cycle T, the high-frequency current Ia1, Ia2 and the high-frequency current Ib1, Ib2 run through the sub-coils 103, 104 and the sub-coils 103, 104 in the same clockwise direction as illustrated in FIG. 8.

Thus, according to the fourth embodiment, as the high-frequency currents run through the central coil (sub-coils 101, 102) and the peripheral coil (sub-coils 103, 104) in the same direction in the parallel mode, the magnetic field generated by each of the sub-coils is reinforced in the regions where the sub-coils 101 to 104 are close to each other, thereby improving an efficiency for heating the pan P, reducing the circuit loss of the driver 40, and down-sizing the cooling mechanism (such as a cooling fan and a heatsink) for cooling the driver 40. Therefore, the heating coil 100 according to the fourth embodiment can be used to heat the pan P of complex material containing magnetic and non-magnetic material with the reinforced magnetic field, thereby to enhance the cooking performance.

Also the controller 50 can readily achieve the circuit configuration by controlling the combination of the control signals S1-S6 without use of an undesirable a switching circuit in FIG. 18.

The operation of the heating coil 100 of FIG. 16C connected to the driver circuitries of FIG. 18 for heating the pan P in the parallel drive mode will be described hereinafter. As illustrated by arrows with broken lines of Fig.16A, the central coil (sub-coils 101, 102) is formed by winding the linear conductor from the inner end to the outer end, for example, in the clockwise direction, while the peripheral coil (sub-coils 103, 104) is formed by winding it in the counter-clockwise direction.

FIG. 18 is a circuit diagram of the driver 40 for heating the pan P in the serial drive mode according to the fourth embodiment. Similar reference numerals are used for indicating components having similar functions.

In the serial drive mode, when focusing on the inner ends of the sub-coils 101 to 104 shown in FIG. 18, at a particular phase within one cycle T, the high-frequency current Ic runs from the second arm 402 through the outer end of the sub-coil 102, the inner end of the sub-coil 102, the outer end of the sub-coil 101, and the inner end of the sub-coil 101 to the resonance capacitor 80a.

As discussed above, when the first arm 401 is in Non-conductive condition in the serial drive mode because of the control signals S1, S2 output from the controller 50 (not shown) being kept at Low-level, the high-frequency current Ic further runs from the middle node of the first arm 401 through the resonance capacitor 80b, the outer end of the sub-coil 104, the inner end of the sub-coil 104, the outer end of the sub-coil 103, and the inner end of the sub-coil 103 to the third arm 403. However, it is needless to mention, in the reverse phase, the high-frequency current run through the sub-coils 101 to 104 in the alternate direction.

The amount of the high-frequency current Ic is determined by the phase difference θ3 ( > 0) between the control signals S3, S5 (or between the control signals S4, S6) as illustrated in FIG. 9. The greater phase difference θ3 causes more amount of the high-frequency current through the sub-coils 101 to 104. Although not shown herein, the controller 50 is adapted to control the phase difference θ3 so as to achieve the heating power selected by the user via the upper console 5 or the front console 6.

FIG. 11 is a top plan view of the heating coil 100 of the second embodiment showing directions of the high-frequency current when heating the pan P in the serial drive mode according to the fourth embodiment. The high-frequency current Ia2 (i.e., Ic) runs from the outer end of the sub-coil 102 in the counter-clockwise direction through the inner end of the sub-coil 101, and subsequently the high-frequency current Ib2 (i.e., Ic) runs from the outer end of the sub-coil 104 in the clockwise direction along the wound wire and the high-frequency current Ib1 (i.e., Ic) runs through the sub-coil 103. Thus, in FIG. 11, the high-frequency current Ic runs sequentially through Ia2, Ia1, Ib2, and Ib1.

Therefore, when the heating coil 100 according to the fourth embodiment is used to heat the pan P in the serial drive mode, the high-frequency current Ic runs subsequently through the sub-coils 101 to 104, and the directions thereof through the central coil (sub-coils 101, 102) and the peripheral coil (the sub-coils 103, 104) are opposite, and thus the magnetic field in the region adjacent to the sub-coils 102, 103 are cancelled or weaken by each other so that the pan P is heated evenly. Therefore, the heating coil 100 according to the fourth embodiment may be used in the serial drive mode to heat the pan P in an even or uniform manner, thereby to enhance the cooking performance.

Also the controller 50 can readily achieve the circuit configuration in the serial mode by controlling the combination of the control signals S1-S6 without use of an undesirable a switching circuit. Furthermore, in the fourth embodiment, the small pan P standing on the top plate can be heated in a similar manner to the first embodiment, thereby to perform the same operations with the advantages similar to those in the individual mode of the first embodiment, which will not be described herein in detail.

It should be noted that in the fourth embodiment, the heated body, i.e., the pan P may be any type of pans such as a pot and a flying pan, as far as being made of material which can be inductively heated, thereby achieving the similar advantages.

Embodiment 5.

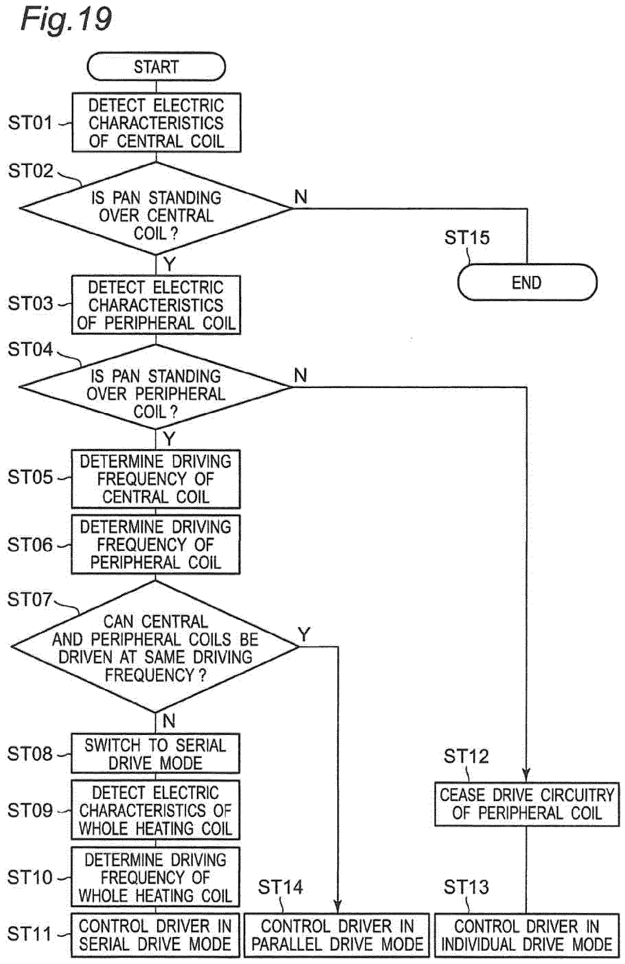

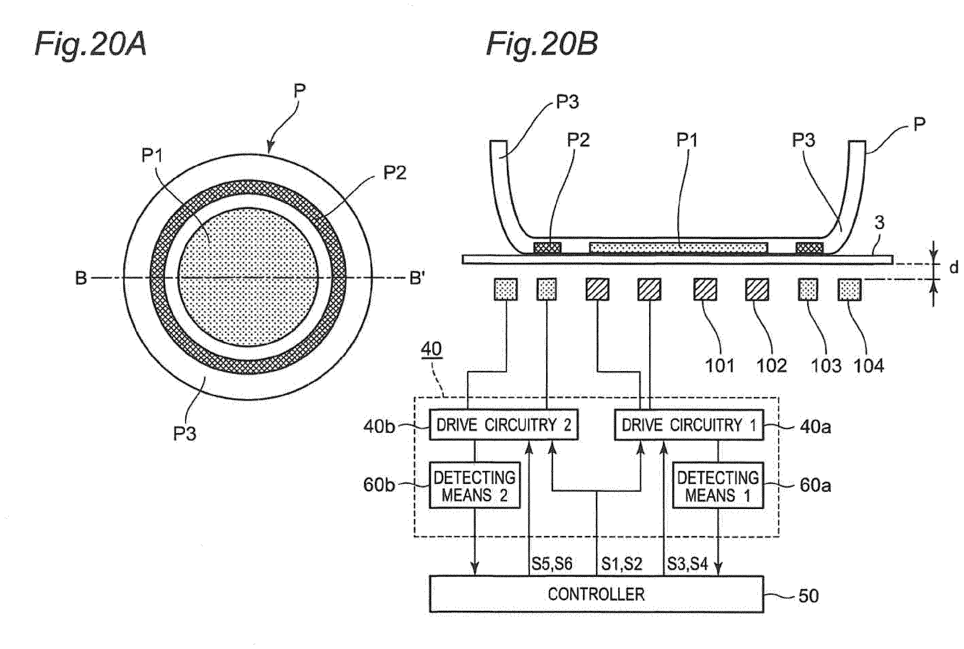

Referring to FIGs. 19, 20, the fifth embodiment of the induction-heating cooker according to the present invention will be described hereinafter. In the fifth embodiment, the control method of the above-described induction-heating cooker 1 according to the present invention will be described hereinafter, to select (or switch) either one of the parallel drive mode, the serial drive mode, and the individual drive mode. Thus, since the induction-heating cooker 1 of the fifth embodiment is similar to those of the first to fourth embodiments, the duplicated description in detail for the common features of the induction-heating cooker will be abbreviated. Similar reference numerals are used for indicating components having similar functions.

FIG. 19 is a flowchart showing a method for controlling the induction-heating cooker 1 according to the present invention. FIG. 20A is a bottom plan view of the pan made of composite material containing magnetic material and non-magnetic material, and FIG. 20B is a cross sectional view of the IH heating unit 10 taken along B-B' line of FIG. 20A, showing the circuit diagram comprising the driver 40, the controller 50, and the heating coil 100 (sub-coils 101 to 104).

The pan P of FIG. 20A includes a central portion P1 of magnetic material, a peripheral portion P2 of non-magnetic material, and the remaining side-wall portion P3. The side-wall portion P3 may be made of non-magnetic material to reduce the total weight of the pan P. The pan P may be designed so that the central portion P1 and the peripheral portion P2 substantially oppose to the central coil (sub-coils 101, 102) and the peripheral coil (sub-coils 103, 104), respectively. Although the central portion P1 and the peripheral portion P2 are illustrated as a disc member and a ring member arranged concentrically, the pan P may be formed of magnetic and non-magnetic material arranged in a special pattern, which is referred to as a "special pan" herein.

Referring to the flowchart of FIG. 19, the operation of the controller 50 and the driver 40 will be described hereinafter. Each of decision steps of FIG. 19 are preferably made during the sequential detecting process of the load characteristics before supplying the high-frequency current to each of the sub-coils 101 to 104. It should be noted that a step for determining by a controller 50 whether the heated body on the top plate 3 can be inductively heated, and each step following step ST01 are performed assuming that the heated body can be inductively heated.

Firstly, the controller 50 determines at step ST02 whether the pan P stands over the central coil by comparing the electric characteristics of the sub-coils 101, 102 (central coil) detected by the first detecting means 60a at step ST01 with predetermined thresholds. If the controller 50 determines no pan P standing over the central coil (in case of "No"), then it outputs the control signals S1-S6 to drive all semiconductor switches of the first, second and third arms of the driver 40 at OFF-condition so as to cease the driver 40 at step ST15.

If the controller 50 determines the pan P standing over the central coil (in case of "Yes" at step ST02), next it determines at step ST04 whether the pan P stands over the peripheral coil by comparing the electric characteristics of the sub-coils 103, 104 (peripheral coil) detected by the second detecting means 60b at step ST03 with predetermined thresholds. If the controller 50 determines no pan P standing over the peripheral coil (in case of "No") or the small pan P standing over the central coil, then it outputs the control signals S5, S6 to switch the semiconductor switches 403a, 403b of the third arm of the driver 40 to OFF-condition so as to cease the second drive circuitry 40b for the peripheral coil at step ST12, and to drive the first drive circuitry 40a only for the central coil (small pan P) in the individual drive mode at step ST13.

On the other hand, if the controller 50 determines the pan P standing also over the peripheral coil (in case of "Yes" at step ST04), then it controls the first detecting means 60a to detect the resonance frequency of the constituent material (such as steel and aluminum) of a portion of the pan P opposing to the central coil and tentatively determines the drive frequency in accordance with the resonance frequency of the central coil at step ST05. Also the controller controls the second detecting means 60b to detect the resonance frequency of the constituent material of a portion of the pan P opposing to the peripheral coil, and tentatively determines the drive frequency in accordance with the resonance frequency of the peripheral coil at step ST06.

When the pan P is not the special pan as illustrated in FIG. 20A and is made of homogeneous metal material, the resonance frequencies detected by the first and second detecting means 60a, 60b are substantially the same, and therefore, the controller 50 determines that the central and peripheral coils can be driven at the same driving frequency (in case of "Yes" at step ST07). Then the controller 50 controls to drive the central and peripheral coils in the parallel drive mode by means of the control signals S1-S6 at the same driving frequency at step ST14.

On the other hand, when the pan P is the special pan as illustrated in FIG. 20A, namely, the resonance frequency of the central portion P1 of the magnetic material detected by the first detecting means 60a is far different from the resonance frequency of the peripheral portion P2 of the non-magnetic material detected by the second detecting means 60b, and the difference of the resonance frequencies between the central portion P1 of the magnetic material and the peripheral portion P2 of the non-magnetic material exceeds a predetermined threshold, the controller 50 determines that the central and peripheral coils cannot be driven at the same driving frequency (in case of "No" at step ST07). In this case, the controller 50 outputs the control signals S1, S2 to keep the semiconductor switching elements 401a, 401b of the first arm of the driver 40 at Off-condition and controls the driver 40 with the control signals S3-S6 in the serial drive mode at step ST08.

Each of the sub-coils 101 to 104 are connected in series, and the detecting means 60 detects the electric characteristics of a continuous heating coil as a whole for the pan, that is a composite electric characteristics of the central portion PI, the peripheral portion P2, and the side wall portion P3 at step ST09. Furthermore, the detecting means 60 detects a composite resonance frequency for combination of the pan P and the whole of the heating coil in accordance with the composite electric characteristics, and the controller 50 determines the driving frequency in response to the composite resonance frequency at step ST10 and controls the driver 40 to drive the central and peripheral coils in the serial drive mode with the control signals S3-S6 of the same driving frequency at step ST11.

It should be noted that although the appropriate drive mode is described above to be selected mainly by the resonance frequency, the drive mode may be selected by the load characteristics or identifying information for distinguishing the difference of the load characteristics for portions of the pan P, which is detected in accordance with the electric characteristics such as current through the power source 30, the high-frequency current through and voltage across the central coil and the peripheral coil, and voltage across the resonance capacitors 80a, 80b.

It should be noted that the heated body, namely the pan P, may be any type of pans such as a pot and a flying pan, as far as being made of material which can be inductively heated, thereby achieving the similar advantages.

As discussed above, according to the induction-heating cooker 1 of the present invention, when the heated body is such a special pan so that the sub-coils 101 to 104 cannot appropriately be heated at the same driving frequency, the controller 50 controls the driver 40 with the control signals S3-S6 of the same driving frequency in the serial drive mode, in which a simple control method of the induction-heating cooker 1 can be achieved. Also, the sub-coils 101 to 104 can readily be switched to the serial drive mode so as to suppress the uneven high-frequency current which is supplied to each of the sub-coils 101 to 104 connected in series so as to reduce the heating deviation for the pan P, thereby enhancing the cooking performance. Furthermore, as the central and peripheral coils can be driven at the same frequency so as to reduce the interring noise due to the difference of the driving frequencies.

Denotation of Reference Numerals

| | |
|---|---|
| 1 | induction-heating cooker |
| 2 | housing |
| 3 | top plate |
| 4 | cooking oven |
| 5 | upper console |
| 6 | front console |
| 7 | display |
| 8 | outtake and intake window |
| 9, 10 | IH heating unit |
| 11 | radiant heating unit |
| 30 | power source |
| 31 | alternate power source |
| 32 | diode-bridge |
| 33 | smoothing circuitry |
| 40 | driver (drive circuitry) |
| 401-403 | arm of semiconductor switching elements |
| 401a-403a, 401b-403b | semiconductor switching elements |
| 50 | controller |
| 60 | detecting means |
| 70 | resonance load circuitry |
| 80 | resonance capacitor |
| 100 | heating coil |
| 101-104 | sub-coil |
| S1-S6 | control signal |
| Ia, Ib, Ic, Id | high-frequency current |
| P | heated body (pan) |
| P1,P2, P3 | portion of special pan |

**Claims**

1. An induction-heating cooker (1), comprising:

    - a top plate (3) for supporting a heated body (P) thereon;
    - a central coil (101,102) wound on a plane;
    - a peripheral coil (103,104) arranged around the central coil (101,102)
    - a driver (40) supplying high-frequency current to the central coil (101,102) and the peripheral coil (103,104);
    - a power source applying direct voltage across the driver (40);
    - means (60) for detecting load characteristics of portions of the heated body (P) standing over the central coil (101,102) and the peripheral coil (103,104) via the top plate (3); and **characterised by**
- a controller (50) for controlling the driver (40), in accordance with the load resistance of the portions of the heated body, in either one of drive modes selected from:

> a) a parallel drive mode in which the driver is controlled with both of the central coil and the peripheral coil being connected in parallel across a direct voltage of the power source,
> b) a serial drive mode in which the driver is controlled with the central coil and the peripheral coil being connected in series across the direct voltage of the power source, and
> c) an individual drive mode in which the driver is controlled with either one of the central coil and the peripheral coil being connected across the direct voltage of the power source.

2. The induction-heating cooker (1) according to claim 1, wherein the driver (40) comprises first, second, and third arms (401,402,403) each including a pair of switching elements (401a,401b,402a,402b,403a,403b) connected in series across the direct voltage of the power source, a first resonance capacitor (80a) connected in series with the central coil (101,102) between middle points of the first and second arms (401,401) and a second resonance capacitor (80b) connected in series with the peripheral coil (103,104) between middle points of the first and third arms (401,403).

3. The induction-heating cooker (1) according to claim 2, wherein the controller controls the driver in the parallel drive mode to drive the first, second, and third arms of the switching elements.

4. The induction-heating cooker (1) according to claim 3, wherein the first and second arms, the central coil, and the first resonance capacitor compose a first full-bridge drive circuitry to supply the high-frequency current to the central coil, and wherein the first and third arms, the peripheral coil, and the second resonance capacitor compose a second full-bridge drive circuitry to supply the high-frequency current to the peripheral coil.

5. The induction-heating cooker (1) according to claim 2, wherein the controller controls the drive circuitry in the serial drive mode to drive the second and third arms of the switching elements without driving the first arm of the switching elements.

6. The induction-heating cooker (1) according to claim 5, wherein the first and third arms, the central coil and the peripheral coil connected in series, and wherein the first and second resonance capacitors compose a third full-bridge drive circuitry to supply the high-frequency current to the central coil and the peripheral coil.

7. The induction-heating cooker (1) according to claim 5, wherein the controller controls the driver in the serial drive mode so that the high-frequency current runs through the central coil and the peripheral coil in substantially the same circumferential direction thereof.

8. The induction-heating cooker (1) according to claim 2, wherein the controller controls the driver in the individual drive mode to drive either one of the second and third arms of the switching elements without driving the other one of the second and third arms of the switching elements.

9. The induction-heating cooker (1) according to any one of claims 1 to 8, wherein the central coil and the peripheral coil are configured to heat the single heated body in cooperation with each other.

10. The induction-heating cooker (1) according to claim 9, wherein the controller is configured to compare the resonance frequencies of the portions of the heated body with predetermined thresholds to select one of the drive modes.

11. The induction-heating cooker (1) according to claim 10, wherein if the controller determines the difference between a first resonance frequency of the portion of the heated body standing over the central coil and a second resonance frequency of the portion of the heated body standing over the peripheral coil being greater than a predetermined differential threshold, the detecting means detects a composite resonance frequency of the central coil and the peripheral coil connected in series so that the controller controls the driver in the serial drive mode.

12. The induction-heating cooker (1) according to claim 1, wherein the detecting means detects load characteristics of a plurality of portions of the heated body standing over the central coil and the peripheral coil via the top plate, and wherein the controller compares the load characteristics of the plurality of portions of the heated body detected by the plurality of the detecting means with predetermined thresholds, and selects the serial drive mode upon determining that the portions of the heated body standing over the central coil and the peripheral coil are made of constituent materials different from each other.

13. The induction-heating cooker (1) according to claim 1, wherein the detecting means detects resonance frequencies of a plurality of portions of the heated body, and wherein the controller determines the heated body being made of complex material upon determining a difference among the resonance frequencies detected by the detecting means being greater than a predetermined differential threshold.

14. A method for controlling an induction-heating cooker (1), the induction-heating cooker comprising first, second, and third arms (401,402,403) each including a pair of switching elements (401a,401b,402a,402b,403a,403b) connected in series, a first resonance capacitor (80a) connected in series between middle points of the first and second arms (401,402), and a second resonance capacitor (80b) connected in series between middle points of the first and third arms (401,403), applying direct voltage across the first, second, and third arms (401,402,403); detecting load characteristics of portions of a heated body (P) standing over the central coil (101,102) and the peripheral coil (103,104);

a) in a parallel drive mode, controlling to drive the first, second, and third arms of the switching elements so as to supply high-frequency current to the central coil and the peripheral coil connected in parallel,
b) in a serial drive mode, controlling to drive the second and third arms of the switching elements without driving the first arm of the switching elements so as to supply high-frequency current to the central coil and the peripheral coil connected in serial, or
c) in an individual drive mode, controlling to drive the first arm of the switching elements and either one of the second and third arms of the switching elements without driving the other one of the second and third arms of the switching elements so as to supply high-frequency current to either one of the central coil and the peripheral coil.

15. The method according to claim 14,
wherein the step of controlling to drive the first, second, and third arms of the switching elements includes,
comparing the load characteristics of a plurality of portions of the heated body standing over the central coil and the peripheral coil with predetermined thresholds, and
selecting the serial drive mode upon determining that the portions of the heated body standing over the central coil and the peripheral coil are made of constituent materials different from each other.

**Patentansprüche**

1. Induktionskochfeld (1), das Folgendes aufweist:

- eine obere Platte (3), um darauf einen zu erwärmenden Körper (P) zu tragen;
- eine zentrale Spule (101, 102), die auf einer Ebene gewickelt ist;
- eine Umfangsspule (103, 104), die um die zentrale Spule (101, 102) herum angeordnet ist;
- eine Ansteuereinrichtung (40), die der zentralen Spule (101, 102) und der Umfangsspule (103, 104) Hochfrequenzstrom zuführt;
- eine Energiequelle, die eine Gleichspannung an die Ansteuereinrichtung (40) anlegt;
- eine Einrichtung (60) zum Detektieren von Lasteigenschaften von Bereichen des zu erwärmenden Körpers (P), der über der zentralen Spule (101, 102) und der Umfangsspule (103, 104) steht, und zwar durch die obere Platte (3); und **gekennzeichnet durch**
- eine Steuerung (50) zum Steuern der Ansteuereinrichtung (40) in Abhängigkeit von dem Lastwiderstand der Bereiche des zu erwärmenden Körpers in einem der folgenden Ansteuerungsmodi:

a) einem parallelen Ansteuerungsmodus, bei dem die Ansteuereinrichtung gesteuert wird, wobei sowohl die zentrale Spule als auch die Umfangsspule zu der Gleichspannung der Stromquelle parallelgeschaltet sind,
b) einem seriellen Ansteuerungsmodus, bei dem die Ansteuereinrichtung gesteuert wird, wobei die zentrale Spule und die Umfangsspule zu der Gleichspannung der Stromquelle in Reihe geschaltet sind, und
c) einem individuellen Ansteuerungsmodus, bei dem die Ansteuereinrichtung gesteuert wird, wobei die eine von der zentralen Spule und der Umfangsspule parallel zu der Gleichspannung der Stromquelle angeschlossen ist.

2. Induktionskochfeld (1) nach Anspruch 1,

wobei die Ansteuereinrichtung (40) Folgendes aufweist:

einen ersten, einen zweiten und einen dritten Arm (401, 402, 403), die jeweils ein Paar Schaltelemente (401a, 401b, 402a, 402b, 403a, 403b) aufweisen, die in Reihe parallel zu der Gleichspannung der Energiequelle geschaltet sind;
einen ersten Resonanzkondensator (80a), der in Reihe mit der zentralen Spule (101, 102) zwischen Mittelpunkten des ersten und des zweiten Arms (401, 402) geschaltet ist; und
einen zweiten Resonanzkondensator (80b), der in Reihe mit der Umfangsspule (103, 104) zwischen Mittelpunkten des ersten und des dritten Arms (401, 403) geschaltet ist.

3. Induktionskochfeld (1) gemäß Anspruch 2,
wobei die Steuerung die Ansteuereinrichtung in dem parallelen Ansteuerungsmodus so steuert, dass der erste, der zweite und der dritte Arm der Schaltelemente angesteuert werden.

4. Induktionskochfeld (1) gemäß Anspruch 3,
wobei der erste und der zweite Arm, die zentrale Spule und der erste Resonanzkondensator eine erste Vollbrücken-Ansteuerschaltung bilden, um der zentralen Spule Hochfrequenzstrom zuzuführen, und
wobei der erste und der dritte Arm, die Umfangsspule und der zweite Resonanzkondensator eine zweite Vollbrücken-Ansteuerschaltung bilden, um der Umfangsspule Hochfrequenzstrom zuzuführen.

5. Induktionskochfeld (1) gemäß Anspruch 2,
wobei die Steuerung die Ansteuerschaltung in dem seriellen Ansteuerungsmodus so steuert, dass der zweite und der dritte Arm der Schaltelemente angesteuert werden, ohne den ersten Arm der Schaltelemente anzusteuern.

6. Induktionskochfeld (1) gemäß Anspruch 5,
wobei der erste und der dritte Arm, die zentrale Spule und die Umfangsspule in Reihe geschaltet sind, und
wobei der erste und der zweite Resonanzkondensator eine dritte Vollbrücken-Ansteuerschaltung bilden, um der zentralen Spule und der Umfangsspule Hochfrequenzstrom zuzuführen.

7. Induktionskochfeld (1) gemäß Anspruch 5,
wobei die Steuerung die Ansteuereinrichtung in dem seriellen Ansteuerungsmodus derart steuert, dass der Hochfrequenzstrom durch die zentrale Spule und die Umfangsspule im Wesentlichen in der gleichen Umfangsrichtung hiervon fließt.

8. Induktionskochfeld (1) gemäß Anspruch 2,
wobei die Steuerung die Ansteuereinrichtung in dem individuellen Ansteuerungsmodus so steuert, dass der eine von dem zweiten und dem dritten Arm der Schaltelemente angesteuert wird, ohne den anderen von dem zweiten Arm und dem dritten Arm der Schaltelemente anzusteuern.

9. Induktionskochfeld (1) gemäß einem der Ansprüche 1 bis 8,
wobei die zentrale Spule und die Umfangsspule dazu ausgebildet sind, den einzelnen erwärmten Körper in Kooperation miteinander zu erwärmen.

10. Induktionskochfeld (1) gemäß Anspruch 9,
wobei die Steuerung dazu ausgebildet ist, die Resonanzfrequenzen der Bereiche des zu erwärmenden Körpers mit vorbestimmten Schwellenwerten zu vergleichen, um einen von den Ansteuermodi auszuwählen.

11. Induktionskochfeld (1) gemäß Anspruch 10,
wobei dann, wenn die Steuerung bestimmt, dass die Differenz zwischen einer ersten Resonanzfrequenz des Bereichs des zu erwärmenden Körpers, der über der zentralen Spule steht, und einer zweiten Resonanzfrequenz des Bereichs des zu erwärmenden Körpers, der über der Umfangsspule steht, größer ist als ein vorbestimmter Differenzschwellenwert, die Detektionseinrichtung eine zusammengesetzte Resonanzfrequenz der zentralen Spule und der in Reihe geschalteten Umfangsspule detektiert, und zwar derart, dass die Steuerung die Ansteuereinrichtung in dem seriellen Ansteuerungsmodus steuert.

12. Induktionskochfeld (1) gemäß Anspruch 1,
wobei die Detektionseinrichtung Lasteigenschaften einer Vielzahl von Bereichen des zu erwärmenden Körpers detektiert, der über der zentralen Spule und der Umfangsspule steht, und zwar durch die obere Platte, und

wobei die Steuerung die Lasteigenschaften der Vielzahl von Bereichen des zu erwärmenden Körpers, die mittels der Vielzahl von Detektionseinrichtungen detektiert werden, mit vorbestimmten Schwellenwerten vergleicht und den seriellen Ansteuerungsmodus auswählt, wenn bestimmt worden ist, dass die Bereiche des zu erwärmenden Körpers, der über der zentralen Spule und der Umfangsspule steht, aus voneinander verschiedenen Materialien hergestellt sind.

13. Induktionskochfeld (1) gemäß Anspruch 1,
   wobei die Detektionseinrichtung Resonanzfrequenzen einer Vielzahl von Bereichen des zu erwärmenden Körpers detektiert, und
   wobei die Steuerung bestimmt, dass der erwärmte Körper aus einem komplexem Material hergestellt ist, wenn sie eine Differenz bei den von der Detektionseinrichtung detektierten Resonanzfrequenzen bestimmt, die größer ist als ein vorbestimmter Differenzschwellenwert.

14. Verfahren zum Steuern eines Induktionskochfelds (1),
   wobei das Induktionskochfeld (1) Folgendes aufweist:

   einen ersten, einen zweiten und einen dritten Arm (401, 402, 403), die jeweils ein Paar Schaltelemente (401a, 401b, 402a, 402b, 403a, 403b) aufweisen, die in Reihe geschaltet sind;
   einen ersten Resonanzkondensator (80a), der in Reihe zwischen Mittelpunkten des ersten und des zweiten Arms (401, 402) geschaltet ist; und
   einen zweiten Resonanzkondensator (80b), der in Reihe zwischen Mittelpunkten des ersten und des dritten Arms (401, 403) geschaltet ist,
   wobei das Verfahren folgende Schritte aufweist:

   - Anlegen von Gleichspannung an den ersten, den zweiten und den dritten Arm (401, 402, 403);
   - Detektieren von Lasteigenschaften von Bereichen eines zu erwärmenden Körpers (P), der über der zentralen Spule (101, 102) und der Umfangsspule (103, 104) steht;

   a) in einem parallelen Ansteuerungsmodus, Steuern des Ansteuerns des ersten, des zweiten und des dritten Armes der Schaltelemente derart, dass der zentralen Spule und der parallelgeschalteten Umfangsspule Hochfrequenzstrom zugeführt wird,
   b) in einem seriellen Ansteuerungsmodus, Steuern des Ansteuerns des zweiten und des dritten Armes der Schaltelemente, ohne den ersten Arm der Schaltelemente anzusteuern, derart, dass der zentralen Spule und der in Reihe geschalteten Umfangsspule Hochfrequenzstrom zugeführt wird, oder
   c) in einem individuellen Ansteuerungsmodus, Steuern des Ansteuerns des ersten Arms der Schaltelemente und des einen von dem zweiten Arm und dem dritten Arm der Schaltelemente, ohne den anderen von dem zweiten Arm und dem dritten Arm der Schaltelemente anzusteuern, derart, dass einer von der zentralen Spule und der Umfangsspule Hochfrequenzstrom zugeführt wird.

15. Verfahren gemäß Anspruch 14,
   wobei der Schritt des Steuerns zum Ansteuern des ersten, des zweiten und des dritten Arms der Schaltelemente folgende Schritte umfasst:

   - Vergleichen der Lasteigenschaften einer Vielzahl von Bereichen des zu erwärmenden Körpers, der über der zentralen Spule und der Umfangsspule steht, mit vorbestimmten Schwellenwerten, und
   - Auswählen des seriellen Ansteuerungsmodus, wenn bestimmt worden ist, dass die Bereiche des zu erwärmenden Körpers, der über der zentralen Spule und der Umfangsspule steht, aus voneinander verschiedenen Materialien hergestellt sind.

**Revendications**

1. Appareil de cuisson à induction (1), comprenant :

   - une plaque supérieure (3) destiné à supporter un corps chauffé (P) se trouvant sur celle-ci ;
   - une bobine centrale (101, 102) enroulée dans un plan ;
   - une bobine périphérique (103, 104) disposée autour de la bobine centrale (101, 102) ;
   - un dispositif d'excitation (40) fournissant un courant à haute fréquence à la bobine centrale (101, 102) et à la bobine périphérique (103, 104) ;
- une source d'alimentation appliquant une tension continue au dispositif d'excitation (40) ;
- des moyens (60) pour détecter des caractéristiques de charge de parties du corps chauffé (P) se trouvant au-dessus de la bobine centrale (101, 102) et de la bobine périphérique (103, 104) via la plaque supérieure (3) ;

et **caractérisé par**

- un dispositif de commande (50) pour commander le dispositif d'excitation (40), en fonction de la résistance de charge des parties du corps chauffé, dans l'un des modes d'excitation choisis parmi :

a) un mode d'excitation parallèle dans lequel le dispositif d'excitation est commandé avec la bobine centrale et la bobine périphérique connectées en parallèle à une tension continue de la source d'alimentation,
b) un mode d'excitation série dans lequel le dispositif d'excitation est commandé avec la bobine centrale et la bobine périphérique connectées en série à la tension continue de la source d'alimentation et
c) un mode d'excitation individuel dans lequel le dispositif d'excitation est commandé avec l'une ou l'autre de la bobine centrale et de la bobine périphérique connectée à la tension continue de la source d'alimentation.

2. Appareil de cuisson à induction (1) selon la revendication 1,
dans lequel le dispositif d'excitation (40) comprend des premier, deuxième et troisième bras (401, 402, 403) incluant chacun une paire d'éléments de commutation (401a, 401b, 402a, 402b, 403a, 403b) connectés en série à la tension continue de la source d'alimentation, un premier condensateur de résonance (80a) connecté en série avec la bobine centrale (101, 102) entre des points médians des premier et deuxième bras (401, 401) et un deuxième condensateur de résonance (80b) connecté en série avec la bobine périphérique (103, 104) entre des points médians des premier et troisième bras (401, 403).

3. Appareil de cuisson à induction (1) selon la revendication 2,
dans lequel le dispositif de commande commande le dispositif d'excitation dans le mode d'excitation parallèle pour exciter les premier, deuxième et troisième bras des éléments de commutation.

4. Appareil de cuisson à induction (1) selon la revendication 3,
dans lequel les premier et deuxième bras, la bobine centrale et le premier condensateur de résonance composent un premier circuit d'excitation en pont intégral pour fournir le courant à haute fréquence à la bobine centrale et dans lequel les premier et troisième bras, la bobine périphérique et le deuxième condensateur de résonance composent un deuxième circuit d'excitation en pont intégral pour fournir le courant à haute fréquence à la bobine périphérique.

5. Appareil de cuisson à induction (1) selon la revendication 2,
dans lequel le dispositif de commande commande le circuit d'excitation dans le mode d'excitation série pour exciter les deuxième et troisième bras des éléments de commutation sans exciter le premier bras des éléments de commutation.

6. Appareil de cuisson à induction (1) selon la revendication 5,
dans lequel les premier et troisième bras, la bobine centrale et la bobine périphérique sont connectés en série et dans lequel les premier et deuxième condensateurs de résonance composent un troisième circuit d'excitation en pont intégral pour fournir le courant à haute fréquence à la bobine centrale et à la bobine périphérique.

7. Appareil de cuisson à induction (1) selon la revendication 5,
dans lequel le dispositif de commande commande le dispositif d'excitation dans le mode d'excitation série de sorte que le courant à haute fréquence circule à travers la bobine centrale et la bobine périphérique dans sensiblement la même direction circonférentielle de celles-ci.

8. Appareil de cuisson à induction (1) selon la revendication 2,
dans lequel le dispositif de commande commande le dispositif d'excitation dans le mode d'excitation individuel pour exciter l'un des deuxième et troisième bras des éléments de commutation sans exciter l'autre des deuxième et troisième bras des éléments de commutation.

9. Appareil de cuisson à induction (1) selon l'une quelconque des revendications 1 à 8,
dans lequel la bobine centrale et la bobine périphérique sont configurées pour chauffer le corps chauffé unique en coopération l'une avec l'autre.

10. Appareil de cuisson à induction (1) selon la revendication 9,
dans lequel le dispositif de commande est configuré pour comparer les fréquences de résonance des parties du corps chauffé avec des seuils prédéterminés pour sélectionner l'un des modes d'excitation.

11. Appareil de cuisson à induction (1) selon la revendication 10,
dans lequel, si le dispositif de commande détermine que la différence entre une première fréquence de résonance de la partie du corps chauffé se trouvant au-dessus de la bobine centrale et une deuxième fréquence de résonance de la partie du corps chauffé se trouvant au-dessus de la bobine périphérique est supérieure à un seuil différentiel prédéterminé, les moyens de détection détectent une fréquence de résonance composite de la bobine centrale et de la bobine périphérique connectées en série, de sorte que le dispositif de commande commande le dispositif d'excitation dans le mode d'excitation série.

12. Appareil de cuisson à induction (1) selon la revendication 1,
dans lequel les moyens de détection détectent des caractéristiques de charge d'une pluralité de parties du corps chauffé se trouvant au-dessus de la bobine centrale et de la bobine périphérique via la plaque supérieure et
dans lequel le dispositif de commande compare les caractéristiques de charge de la pluralité de parties du corps chauffé détectées par la pluralité des moyens de détection avec des seuils prédéterminés et sélectionne le mode d'excitation série après avoir déterminé que les parties du corps chauffé se trouvant au-dessus de la bobine centrale et de la bobine périphérique sont composées de matériaux constitutifs différents l'un de l'autre.

13. Appareil de cuisson à induction (1) selon la revendication 1,
dans lequel les moyens de détection détectent les fréquences de résonance d'une pluralité de parties du corps chauffé et dans lequel le dispositif de commande détermine que le corps chauffé est composé d'un matériau complexe après avoir déterminé qu'une différence entre les fréquences de résonance détectées par les moyens de détection est supérieure à un seuil différentiel prédéterminé.

14. Procédé de commande d'un appareil de cuisson à induction (1), l'appareil de cuisson à induction comprenant des premier, deuxième et troisième bras (401, 402, 403) incluant chacun une paire d'éléments de commutation (401a, 401b, 402a, 402b, 403a, 403b) connectés en série, un premier condensateur de résonance (80a) connecté en série entre des points médians des premier et deuxième bras (401, 402) et un deuxième condensateur de résonance (80b) connecté en série entre des points médians des premier et troisième bras (401, 403),
le procédé consistant à
appliquer une tension continue aux premier, deuxième et troisième bras (401, 402, 403) ;
détecter des caractéristiques de charge de parties d'un corps chauffé (P) se trouvant au-dessus de la bobine centrale (101, 102) et de la bobine périphérique (103, 104) ;

a) dans un mode d'excitation parallèle, commander l'excitation des premier, deuxième et troisième bras des éléments de commutation de sorte à fournir un courant à haute fréquence à la bobine centrale et à la bobine périphérique connectées en parallèle,
b) dans un mode d'excitation série, commander l'excitation des deuxième et troisième bras des éléments de commutation sans exciter le premier bras des éléments de commutation de sorte à fournir un courant à haute fréquence à la bobine centrale et à la bobine périphérique connectées en série ou
c) dans un mode d'excitation individuel, commander l'excitation du premier bras des éléments de commutation et l'un des deuxième et troisième bras des éléments de commutation sans exciter l'autre des deuxième et troisième bras des éléments de commutation de sorte à fournir un courant à haute fréquence à l'une ou l'autre de la bobine centrale et de la bobine périphérique.

15. Procédé selon la revendication 14,
dans lequel l'étape consistant à commander l'excitation des premier, deuxième et troisième bras des éléments de commutation inclut les étapes consistant à
comparer les caractéristiques de charge d'une pluralité de parties du corps chauffé se trouvant au-dessus de la bobine centrale et de la bobine périphérique avec des seuils prédéterminés et
sélectionner le mode d'excitation série après avoir déterminé que les parties du corps chauffé se trouvant au-dessus de la bobine centrale et de la bobine périphérique sont composées de matériaux constitutifs différents l'un de l'autre.

*Fig.1*

EP 3 133 899 B1

Fig.2A

100

Fig.2B

100

## Fig.3

Fig.4A

Fig.4B

Fig.5

402a
402b
402
60a
40a
80a
401
401a
401b
S3
402b
S4
40b
403a
403b
403

DETECTING MEANS 1
DETECTING MEANS 2

102
101
103
104
60b
80b
S5
S6
S2

331
332
33
30
32
31
S1
60

CONTROLLER

## Fig.6

Fig.7

Fig.8

## Fig.9

Fig.10

*Fig.11*

# Fig.12

Fig.13

Fig.14

Fig.15

*Fig.16A*

100

102 104

103

101

*Fig.16B*

100

102 104

Ia2

Ib2

Ia1

Ib1

103

101

*Fig.16C*

100

102 104

103

101

EP 3 133 899 B1

Fig.17

Fig.18

*Fig.19*

START

ST01 — DETECT ELECTRIC CHARACTERISTICS OF CENTRAL COIL

ST02 — IS PAN STANDING OVER CENTRAL COIL? — N → ST15 END

Y

ST03 — DETECT ELECTRIC CHARACTERISTICS OF PERIPHERAL COIL

ST04 — IS PAN STANDING OVER PERIPHERAL COIL? — N

Y

ST05 — DETERMINE DRIVING FREQUENCY OF CENTRAL COIL

ST06 — DETERMINE DRIVING FREQUENCY OF PERIPHERAL COIL

ST07 — CAN CENTRAL AND PERIPHERAL COILS BE DRIVEN AT SAME DRIVING FREQUENCY? — Y

N

ST08 — SWITCH TO SERIAL DRIVE MODE

ST09 — DETECT ELECTRIC CHARACTERISTICS OF WHOLE HEATING COIL

ST10 — DETERMINE DRIVING FREQUENCY OF WHOLE HEATING COIL

ST12 CEASE DRIVE CIRCUITRY OF PERIPHERAL COIL

ST11 — CONTROL DRIVER IN SERIAL DRIVE MODE

ST14 CONTROL DRIVER IN PARALLEL DRIVE MODE

ST13 CONTROL DRIVER IN INDIVIDUAL DRIVE MODE

Fig.20B

Fig.20A

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010080359 A
- JP 5169488 B
- EP 2405715 A1
- JP 2012054179 A